# EUROPEAN PATENT SPECIFICATION

(11) **EP 4 067 755 B1**
(45) Date of publication and mention of the grant of the patent: **04.06.2025**
(21) Application number: 21166041.0
(22) Date of filing: 30.03.2021
(51) Int. Cl.: F24D 17/00, F24D 19/10, H02J 3/14, H02J 3/28, H02J 13/00

(54) **SYSTEM FOR CONTROLLING A DEMAND RESPONSE OF A PLURALITY OF ELECTRICAL HEATING DEVICES AND USE THEREOF**
SYSTEM ZUR STEUERUNG EINER NACHFRAGEREAKTION EINER VIELZAHL VON ELEKTRISCHEN HEIZVORRICHTUNGEN UND VERWENDUNG DAVON
SYSTÈME DE COMMANDE D'UNE RÉPONSE DE DEMANDE D'UNE PLURALITÉ DE DISPOSITIFS DE CHAUFFAGE ÉLECTRIQUE ET SON UTILISATION

(43) Date of publication of application: 05.10.2022
(73) Proprietor: Mitsubishi Electric R&D Centre Europe B.V., Livingston EH54 5DJ (GB); Mitsubishi Electric Corporation, Tokyo 100-8310 (JP)
(72) Inventor: FREEMAN, James, Livingston EH54 5DJ (GB)
(74) Representative: Pfenning, Meinig & Partner mbB

(56) References cited:
- WO-A1-2021/001060
- US-A1- 2009 093 916
- US-A1- 2010 004 790
- US-A1- 2016 178 677

## Description

A system for controlling a demand response of a plurality of electrical heating devices is provided and a use thereof is suggested. The system is characterized in that it comprises a cloud-based supervisory control (CSC) system which is configured to activate, among all of a plurality of local electrical heating devices (EHDs) of the system, a specific amount of local electrical heating devices (EHDs) depending on a received information about a degree of import and export of electricity for a specific point in time between a electrical-energy exchange means connected to the system and a local, decentralized electricity microgrid connected to the system. The advantage of the system is that it can control the demand response of the electrical heating devices more economically and ecologically. The system has also an operation mode which is capable of preventing the occurrence of strong burdens on the electrical-energy exchange means connected to the system (e.g. a regional-scale or national-scale macrogrid, or local fossil-fuelled back-up generation plant).

In the prior art, electrically powered heating devices coupled with thermal storage devices are known. A relevant example is an air-to-water heat pump coupled with a domestic hot water (DHW) storage tank. The heat pump typically has a local controller system that provides autonomous control of the heat pump to heat the DHW tank. Typically, a thermostat type of control is used to maintain the DHW tank near a desired setpoint temperature value which is stored in the settings of the local controller, with feedback provided by a temperature sensor located in the tank. Additionally, the local control panel may include the ability to operate the heat pump based on signals received from an external source. This could be via a number of established communication protocols such as digitial I/O, Modbus, or Bacnet.

Increasingly many heat pumps and "smart" heating appliances have the ability to communicate with other devices and systems over the internet via a wireless home energy network. Mitsubishi Electric MELCloud^{™} is one example of an internet cloud-based control and monitoring system for heat pumps based on this principle. Presently, cloud-based control and monitoring systems for heat pumps and electric heating devices are used primarily for remote monitoring and control at the single-user level or to assist remote maintenance and technical support. Increasingly the potential is being considered for such communication technologies to enable coordinated control of multiple devices for demand-response (DR) or demand-side management (DSM). Multiple objectives for DR or DSM can be considered, such as CO₂-emissions reduction through maximising utilisation of renewable energy sources ("renewables") or other grid-level services such as frequency response.

Recent legislation such as the EU Energy Performance in Buildings Directive (EPBD) encourages renewable energy for buildings to be from "local" sources (on site or close to site). Consuming locally generated energy when available and minimising grid interaction over large geographical distances is preferable for minimising the stress placed on the grid infrastructure and the logistical complexity encountered by the national/regional grid operator. This is also of particular relevance for off-shore island communities with a limited capacity connection to the mainland electricity grid via a sub-marine interconnector cable.

US 2008/0195561 A1 discloses systems and methods of providing power as it is generated at a consumer's premises.

US 2010/0286937 A1 discloses an energy analysis system which assists with obtaining a detailed view of how energy consumption occurs in a building, what steps may be taken to lower the energy footprint, and executing detailed energy consumption analyses.

US 2011/0012443 A1 discloses a home energy management system and method which includes a database configured to store site report data received from a plurality of residential sites using a wireless home energy network at each site.

US 2012/0185108 A1 discloses a method of determining a level of potential responsive-load electrical power network service susceptible to being provided by one or more power consuming devices.

GB 2 514 179 A discloses an apparatus for controlling the storage of energy in an electrically-heated thermal energy storage unit.

JP 2015 124962 A discloses that, when there is a hot water amount-deficient water heater whose remaining amount of hot water is less than a predetermined amount between heat pump water heaters which are not in boiling operation, an operation control part performs a boiling stop control to stop at least one of heat pump water heaters in boiling operation from performing the boiling operation, and also performs a boiling start control to let the hot water amount-deficient water heater start performing boiling operation.

EP 3 197 001 A1 discloses a power management system which is connected to a system power supply, and which, with respect to a storage battery in a first customer facility having a storage battery and a power generator as electrical equipment, controls discharge thereof to the first customer facility or charge thereof with surplus power generated in the first customer facility.

WO 2021/001060 A1 discloses systems and methods that improve grid performance by smoothing demand using thermal reserves, wherein the smoothed demand can reduce peak loads as well as the ramp rate of demand that will otherwise require the use of inefficient, expensive generation sources. The improvements are tied to the selective switching on or off electrical loads that are coupled to thermal reserves, effectively using the thermal reserves as an energy storage mechanism.

Prior art systems and methods for controlling a demand response of a plurality of electrical heating devices suffer the disadvantage that they are complicated and do not use simple control actions that can be implemented by a local thermostatic controller which is local to each electrical heating device. Moreover, known systems and methods do not have the possibility to control the electrical heating devices to maximally utilize renewable energy sources ("renewables") within an offer between renewable and non-renewable energy sources. Furthermore, prior art systems and methods do not rely on a control which considers that a dynamic response of the energy supply system (import and export of energy) may vary depending on the number and characteristics of the heating devices and thermal storage devices which are connected to the energy supply system. For example, prior art systems and methods do not rely on a control which is capable of shifting peak loads with respect to time.

Starting therefrom, it was the object of the present invention to provide a system for controlling a demand response of a plurality of electrical heating devices which does not suffer the drawbacks of prior art systems and methods. Specifically, the system should be more ecological by keeping the carbon footprint as small as possible (i.e. reduce the "carbon intensity"). Furthermore, the system should be more economical by reducing costs connected to electricity which is imported from distant electricity sources. Moreover, for avoiding temporary and strong burdens on a electrical-energy exchange means (i.e. temporary and strong demands of electricity from said means), the system should also be capable of providing a more steady and predictable energy exchange between a local microgrid and the electrical-energy exchange means.

The objective is solved by the system having the features of claim 1 and the use having the features of claim 16. The dependent claims illustrate advantageous embodiments of the invention.

According to the invention, a system for controlling a demand response of a plurality of electrical heating devices is provided, comprising
a plurality of local electrical heating devices (EHDs), wherein each electric heating device (EHD) is connected to and controlled by a local thermostatic controller (LTC), and is connected to and thermally coupled to a local thermal energy store (TES), wherein each local thermal energy store (TES) comprises a temperature sensor for detecting the temperature of the local thermal energy store (TES);
a local renewable energy system (RES) generator which provides electricity to each of the plurality of local electrical heating devices (EHDs) via a local, decentralized electricity microgrid, wherein the local, decentralized electricity microgrid is electrically connected to an electrical-energy exchange means which is different to the local renewable energy system (RES) generator;
a cloud-based supervisory control (CSC) system which is configured to receive information about a degree of import and export of electricity between the electrical-energy exchange means and the local, decentralized electricity microgrid;
wherein the cloud-based supervisory control (CSC) system is configured to control each local thermostatic controller (LTC) by receiving and sending information to each local thermostatic controller (LTC),
characterized in that
the cloud-based supervisory control (CSC) system is configured to
activate, among all of the plurality of local electrical heating devices (EHDs), a specific amount of local electrical heating devices (EHDs) depending on a received information about the degree of import and export of electricity between the electrical-energy exchange means and the local, decentralized electricity microgrid at a specific point in time, and
perform an operation mode selected from a group consisting of a renewables self-consumption (RSC) operation mode and a peak-load shifting (PLS) operation mode.

The advantage of the inventive system is that, at a specific point in time, the control of the systems allows the amount of active local electrical heating devices to be adjusted to the degree of import and export, i.e. to the ratio between import and export. Thus, the control of the system can ensure that a heating demand at a specific point in time can be met while minimizing an amount of import of electrical energy from a non-renewable-electrical-energy source. This allows the system to keep the carbon footprint as small as possible and to operate more ecologically.

The cloud-based supervisory control (CSC) system can be configured to operate in either the RSC operation mode or the PLS operation mode based on the CSC system operator preference. The choice of the CSC system operating mode thus depends on the preference of the system operator. In the renewables self-consumption (RSC) operation mode, a current local consumption of renewables is maximized, i.e. the use of electrical energy from the RES generator of the system is maximized. For the type of island applications to which this can be targeted, high rates of export at undesirable times can be problematic for the grid operator. Maximising local self-consumption of renewables to charge storage at times of low demand have the secondary benefit of reducing peak demand and associated peak import requirement. In the peak-load shifting (PLS) operation mode, peak-loads known to occur at a specific point in time are shifted to a different point in time at which peak-loads are known to not occur, i.e. this operation mode prevents an occurrence of (temporary) strong burdens on the electrical-energy exchange means connected to the system. Hence, said operation mode of the system reduces the risk of an occurrence of a power failure (blackout) of the electrical-energy exchange means (e.g. of a regional-scale or national-scale macrogrid or of a diesel-based generator) connected to the system.

The cloud-based supervisory control (CSC) system can be characterized in that it is configured to exchange information with each local thermostatic controller (LTC) and/or with the local renewable energy system (RES) generator by means of a suitable Internet of things (IoT) gateway located locally to each device.

The system can be characterized in that, after a start of either the renewables self-consumption (RSC) operation mode or the peak-load shifting (PLS) operation mode, the cloud-based supervisory control (CSC) system is configured to compare an amount of time that has elapsed since a previous control action, to a predetermined control interval. If the amount of time that has elapsed is less than the predetermined control interval, the total number of local electrical heating devices (EHDs) considered in the operation mode is not reviewed or not modified. If the amount of time that has elapsed is equal to or larger than the predetermined control interval, the total number of local electrical heating devices (EHDs) considered in the operation mode is reviewed and is modified, wherein preferably the total number of local electrical heating devices (EHDs) considered in the operation mode is increased, is decreased, or is maintained the same.

Moreover, the system can be characterized in that, in the renewables self-consumption (RSC) operation mode and/or in the peak-load shifting (PLS) operation mode, the cloud-based supervisory control (CSC) system is configured to exchange at least the following information with each local thermostatic controller (LTC):
i) a status of each local electrical heating device (EHD), preferably a status whether a local electrical heating device is currently active or inactive;
ii) a temperature of each local thermal energy store (TES);
iii) a control signal to adjust the heating setpoint value implemented in each local thermostatic controller (LTC); and
iv) a control action to activate a heating cycle on each local electrical heating device (EHD) via each local thermostatic controller (LTC)(preferably as described below).

The cloud-based supervisory control (CSC) system is configured to receive information about a degree of import and export of electricity between the electrical-energy exchange means and the local, decentralized electricity microgrid. To this end, the cloud-based supervisory control (CSC) system can be configured to monitor a net instantaneous import or export of electricity from the local microgrid to the electrical-energy exchange means (e.g. to a wider area macrogrid). In this regard, the system can be characterized in that, in the renewables self-consumption (RSC) operation mode and/or in the peak-load shifting (PLS) operation mode, the cloud-based supervisory control (CSC) system is configured to receive information from at least one, preferably several, metering device(s) which is/are located on the microgrid and which is/are suitable for measuring the quantity of electricity which is exported from the electricity microgrid to the electrical-energy exchange means and which is imported from the electrical-energy exchange means to the electricity microgrid. The presence of the at least one metering device facilitates the cloud-based supervisory control (CSC) system to implement its configuration to make, among all of the plurality of local electrical heating devices (EHDs), active a specific amount of local electrical heating devices (EHDs) depending on a received information about the degree of import and export of electricity between the electrical-energy exchange means and the decentralized electricity microgrid for a specific point in time. In absence of information received from the cloud-based supervisory control (CSC) system, a local thermostatic controller (LTC) provides autonomous control of the local electrical heating device (EHD) based on the current settings stored in the local thermostatic controller (LTC).

Besides, the system can be characterized in that, in the renewables self-consumption (RSC) operation mode, the cloud-based supervisory control (CSC) system is configured to calculate a present average consumption (*P*_{EHD,avg}) of all of the local electrical heating devices (EHDs) having sent a demand signal by dividing a present total consumption of all said devices (EHDs) by the number of said devices (EHDs) that are presently active, wherein the average consumption is used to predict how many of said devices (EHDs) should be activated or deactivated in order to balance import and export of electricity between the electrical-energy exchange means and the decentralized electricity microgrid, wherein said balancing is preferably performed as follows:
i) if the present value of electrical power exported from the microgrid (Pₑₓₚₒᵣₜ) is less than the calculated present average consumption (*P*_{EHD,avg}), a number of devices (EHDs) requested for demand operation (N_{req}) is decreased by 1; and/or
ii) if the present value of electrical power exported from the microgrid (Pₑₓₚₒᵣₜ) is greater than or equal to the calculated present average consumption (*P*_{EHD,avg}) and the present value of a number of devices (EHDs) requested for demand operation (N_{req}) is equal to a maximum value (Nₘₐₓ) representing the maximum amount of local electrical heating devices (EHDs) that can be activated for demand operation, a number of devices (EHDs) requested for demand operation (N_{req}) is maintained at its present value; and/or
iii) if the present value of electrical power exported from the microgrid (Pₑₓₚₒᵣₜ) is greater than or equal to the calculated present average consumption (*P*_{EHD,avg}) and the present value of a number of devices (EHDs) requested for demand operation (N_{req}) is less than maximum value (Nₘₐₓ) representing the maximum amount of local electrical heating devices (EHDs) that can be activated for demand operation, a number of devices (EHDs) requested for demand operation (N_{req}) is increased by 1.

Preferably, if the difference between a new value of the number of devices (EHDs) requested for demand operation (N_{req}) and a current number of devices (EHDs) currently active (N_{active}) is larger than a maximum value (N_{step,max}) representing the maximum amount of local electrical heating devices (EHDs) that can be activated in a single control interval, a new value of the number of devices (EHDs) requested for demand operation (N_{req}) is set equal to the sum of the current number of devices (EHDs) currently active (N_{active}) and the maximum value (N_{step,max}) representing the maximum amount of devices (EHDs) that can be activated in a single control interval, wherein, especially, if the new value of the number of devices (EHDs) requested for demand operation (N_{req}) has been increased relative to a previous time interval, the timer is reset to zero.

Moreover, the system can be characterized in that, in the peak-load shifting (PLS) operation mode, the cloud-based supervisory control (CSC) system is configured to calculate a target electricity demand value (*P*ₛₑₜ) from the average of the total electrical power demand for the entire microgrid (P_{dem}) over the previous n measurement intervals in a certain period of time, wherein n is an integer, wherein, based on a current time of day (ToD) and the target electricity demand value (*P*ₛₑₜ)
i) if the current time of day (ToD) is within a pre-defined peak demand period, the number of devices (EHDs) requested for demand operation (N_{req}) is set to zero; and/or
ii) if the current time of day (ToD) is outside of a pre-defined peak demand period and the current demand is greater than the target electricity demand value (Pₛₑₜ), the number of devices (EHDs) requested for demand operation (N_{req}) is decreased by one; and/or
iii) if the current time of day (ToD) is outside of a pre-defined peak demand period, the current demand is less than or equal to the target electricity demand value (*P*ₛₑₜ) and the present number of devices (EHDs) requested for demand operation (N_{req}) is equal to a maximum value (Nₘₐₓ) representing the maximum amount of local electrical heating devices (EHDs) that can be activated for demand operation, the number of devices (EHDs) requested for demand operation (N_{req}) is maintained at its present value; and/or
iv) if the current time of day (ToD) is outside of a pre-defined peak demand period, the current demand is less than or equal to the target electricity demand value (*P*ₛₑₜ) and the present number of devices (EHDs) requested for demand operation (N_{req}) is less than a maximum value (Nₘₐₓ) representing the maximum amount of local electrical heating devices (EHDs) that can be activated for demand operation, the number of devices (EHDs) requested for demand operation (N_{req}) is increased by 1.

Preferably, if the difference between a new value of the number of devices (EHDs) requested for demand response (N_{req}) and a current number of devices (EHDs) currently active (N_{active}) is larger than a maximum value (N_{step,max}) representing the maximum amount of local electrical heating devices (EHDs) that can be activated in a single control interval, a new value of the number of devices (EHDs) requested for demand response (N_{req}) is set equal to the sum of the current number of devices (EHDs) currently active (N_{active}) and the maximum value (N_{step,max}) representing the maximum amount of devices (EHDs) that can be activated in a single control interval, wherein, especially, if the new value of the number of devices (EHDs) requested for demand response (N_{req}) has been increased relative to a previous time interval, the timer is reset to zero.

Furthermore, the system can be characterized in that, in the renewables self-consumption (RSC) operation mode and/or in the peak-load shifting (PLS) operation mode, the cloud-based supervisory control (CSC) system is configured to assess local electrical heating devices (EHDs) for eligibility criteria and to rank the local electrical heating devices (EHDs) based on their eligibility, wherein a lower ranking index number indicates a higher ranking priority, optionally an index of 1 indicates a highest ranking.

The eligibility criteria of the local electrical heating devices (EHDs) are preferably determined by
i) their status being active or inactive, wherein currently active local electrical heating devices (EHDs) are assigned to a higher ranking priority over currently inactive local electrical heating devices (EHDs); and
ii) a current temperature of the local thermal energy store (TES) to which they are connected, wherein local electrical heating devices (EHDs) connected to a local thermal energy store (TES) having a lower temperature are assigned to a higher ranking priority over local electrical heating devices (EHDs) connected to a local thermal energy store (TES) having a higher temperature.

Preferably, a local electrical heating device (EHD) is eligible if its current status is active and the current temperature of its local thermal energy store (TES) is below a heating setpoint temperature (T_{sp,dr}), or is eligible if its current status is inactive and the current temperature of its local thermal energy store (TES) is below a heating setpoint temperature (T_{sp,dr}) minus a value (ΔT_{drop,min}) by which the temperature of the local thermal energy store (TES) is allowed to drop after a previous operation mode.

What is more, the system can be characterized in that, in the renewables self-consumption (RSC) operation mode and/or in the peak-load shifting (PLS) operation mode, the cloud-based supervisory control (CSC) system is configured to assess local electrical heating devices (EHDs) individually according to their ranking index, such that the controller is configured to submit to
i) all local electrical heating devices (EHDs) that are eligible and have a ranking index less or equal to a value (N_{req}), which represents the amount of local electrical heating devices (EHDs) that are requested for the operation mode, the following control actions:
   Setting of a heating setpoint temperature value (*T*ₛₚ) stored by the local thermostatic controller (LTC) to a demand response value (*T*_{sp,dr}) and storing the previous heating setpoint temperature value (*T*ₛₚ) in regular operating mode as previous heating setpoint temperature value (*T*_{sp, prev}) so that this value can be restored to the local thermostatic controller (LTC) when demand response operation mode finishes;
   Activating the local electrical heating devices (EHDs), or, if already active, maintaining the local electrical heating devices (EHDs) active; and Deactivating the local electrical heating devices (EHD) when a setpoint temperature is reached; and/or
ii) all local electrical heating devices (EHDs) that are not eligible, or are eligible and have a ranking index higher than a value (N_{req}), which represents the amount of local electrical heating devices (EHDs) that are requested for demand response operation mode, receive the following control actions:
   Restoring a temperature value set in the local thermostatic controller (LTC) to a previous heating setpoint temperature value (*T*_{sp, prev}) prior to the operation mode;
   Deactivating the local electrical heating devices (EHDs) or, if not active, maintaining the local electrical heating devices (EHDs) inactive.

Besides, the system can be characterized in that each local thermostatic controller (LTC) is configured to control an operation mode of the local electrical heating devices (EHD) to which it is connected based on at least the following information:
i) a representative temperature value which is measured by a temperature sensor of each local thermal energy store (TES) and communicated to the local thermostatic controller (LTC);
ii) an adjustable heating setpoint temperature value stored by the local thermostatic controller (LTC);
iii) an adjustable hysteresis band stored by the local thermostatic controller (LTC); and
iv) a heating activation command upon detecting that the representative temperature value has dropped below a lower limit value equal to the heating setpoint temperature minus the hysteresis band and/or upon receiving a "HEAT NOW" signal from the cloud-based supervisory control (CSC) system or from a user; and
v) a heating deactivation command upon detecting that the representative temperature has risen above the heating setpoint temperature and/or upon receiving a "HEAT OFF" signal from the cloud-based supervisory control (CSC) system or from a user.

In addition, the system can be characterized in that each local thermostatic controller (LTC) is configured to receive at least the following control parameters from the cloud-based supervisory control system (CSC):
i) a heating setpoint temperature for controlling its connected local thermal energy store (TES), wherein the heating setpoint temperature is a temperature above which the local electrical heating devices (EHD) is deactivated; and
ii) a "HEAT NOW" instruction upon which the local electrical heating devices (EHD) is activated and remains active until the temperature of the local thermal energy store (TES) reaches the heating setpoint temperature.

Beyond that, the system can be characterized in that each local thermostatic controller (LTC) is configured to send information about a current status of the local electrical heating device (EHD) to which it is connected and a current status of the local thermal energy store (TES) to which it is connected to the cloud-based supervisory control (CSC) system at regular intervals. The current status is preferably
i) a status whether the local electrical heating device (EHD) is currently active or inactive; and/or
ii) a status about the current temperature of the local thermal energy store (TES), as determined by its temperature sensor.

Besides that, the system may be characterized in that the cloud-based supervisory control (CSC) system comprises at least one of, preferably all, of the following functions and/or parameters:
i) a programmable control logic function that allows actions to be performed based on true/false Boolean conditions;
ii) a timer function that measures the elapsed time and can be reset according to aforementioned true/false Boolean conditions;
iii) a "sort" function that applies a ranking index to each local electrical heating devices (EHD) based on a multiple attributes prioritised within the control logic;
iv) tuneable parameters for control including: a control time interval; a maximum control increment, and a boosted setpoint temperature applied to the local controller of each of local electrical heating devices (EHD);
v) a memory function that allows the cloud-based supervisory control (CSC) system to store earlier setpoint temperature values applied to each local thermostatic controller (LTC) prior to a demand-response heating operation being activated, and later to restore these previous values to the internal settings of each local thermostatic controller when the demand-response heating operation is deactivated;
vi) a clock function that provides the current time of day, preferably a 24-hour clock; and
vii) Microgrid-level diagnostic functions, specifically an ability to calculate the average total demand for electrical power over a defined historic time period, preferably the previous 24 hours.

Moreover, the System can be characterized in that the electrical-energy exchange means comprises or consists of
i) a wide-area macrogrid, preferably regional-scale macrogrid or national-scale macrogrid; and/or
ii) a non-renewable energy system generator, optionally a diesel-based or petrol-based generator, further optionally in combination with a means for storing energy, preferably a secondary battery and/or a capacitor, wherein in a case in which the means for storing energy is absent from said electrical-energy exchange means or has reached its full electrical charge capacity, the exported power (Pₑₓₚₒᵣₜ) is a curtailed power (P_{curtailed}).

Furthermore, the system can be characterized in that each one of the plurality of local electrical heating devices (EHDs) is a device capable of converting electricity into storable heat, wherein the device capable of converting electricity into storable heat is preferably selected from the group consisting of electric immersion heater, vapour-compression heat pump, thermoelectric devices and combinations thereof.

In addition, the system can be characterized in that each one of the local thermal energy store (TESs) is a vessel containing a medium capable of storing heat within a desired temperature range, wherein the vessel is preferably selected from the group consisting of domestic hot water cylinder, heat transfer fluid buffer vessel, phase change material (PCM) store, packed bed storage vessel and combinations thereof.

According to the invention, a use of the system according to the invention for controlling a demand response of a plurality of electrical heating devices is proposed.

Based on the specific embodiments shown in the following figures and examples, the subject-matter of the invention shall be presented in more detail without wishing to restrict the invention to said specific subject-matter.
Figure 1 is a schematic drawing of an inventive system according to the invention for controlling a demand response of a plurality of electrical heating devices, wherein the electrical-energy exchange means is a wide-area macrogrid in this case.
Figure 2 is a flow chart showing a control method implemented by the cloud-based supervisory control (CSC) system in the renewables self-consumption (RSC) operation mode.
Figure 3 is a flow chart showing a control method implemented by the cloud-based supervisory control (CSC) system in the peak-load shifting (PLS) operation mode.

### Example 1 - Inventive system comprising a wide-area macrogrid

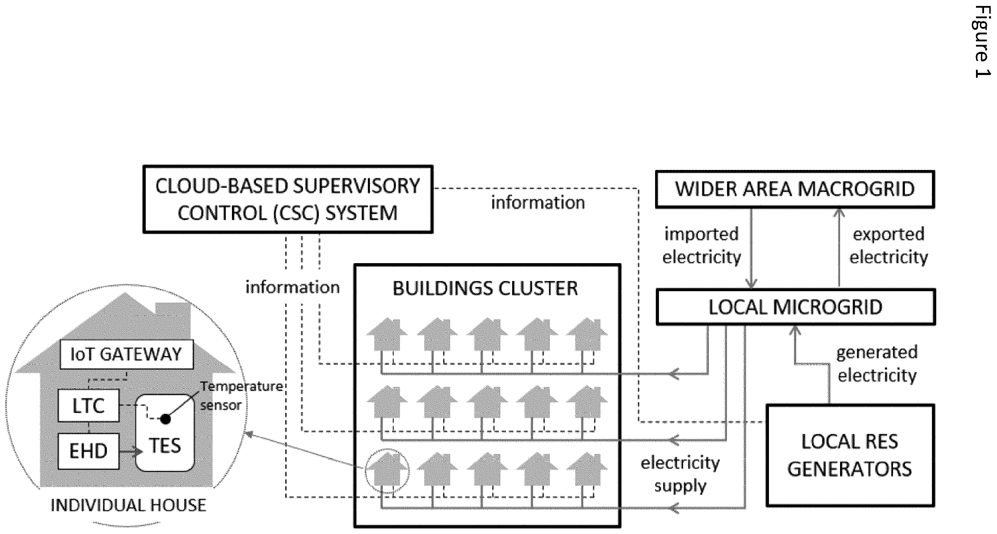

A specific example of a system according to the invention is shown in Figure 1, in which the electrical-energy exchange means comprises or consists a wide-area macrogrid.

In Figure 1, a network of EHDs located in a cluster of residential buildings or dwellings is shown. Each building contains an EHD for domestic hot water provision that is coupled to a thermal store (e.g. a domestic hot water tank) with a local thermostatic controller (LTC).

The cluster of buildings is connected to a decentralised electricity microgrid served by local renewable energy system (RES) generators. The microgrid also has a limited capacity connection to a electrical-energy exchange means, which in this case is a wide-area (regional or national scale) macrogrid, with which electricity can be exchanged (imported or exported). The objective for the CSC is to maximise the autonomy of the microgrid by operating the EHDs in a flexible manner to minimise import and export of electricity to or from the wider area macrogrid. This can be achieved by the configuration of the CSC to make, among all of the plurality of EHDs, active a specific amount of EHDs depending on a received information about the degree of import and export of electricity between the wide-area macrogrid and the decentralized electricity microgrid for a specific point in time.

The CSC system is able to exchange information with each LTC and each RES generator by means of a suitable Internet of things (loT) gateway located locally to each device. The CSC system is also able to the monitor net instantaneous import or export of electricity from the microgrid to the wider area macrogrid. In absence of information received from the CSC system, the LTC provides autonomous control of the EHD based on the current settings stored in the LTC.

The LTC controls the operation of the EHD based on the following information:
- a representative TES temperature value measured by a temperature sensor located in the TES and communicated to the LTC;
- an adjustable heating setpoint temperature value stored by the LTC;
- an adjustable hysteresis band stored by the LTC;
- a "HEAT NOW" command activated when a signal is received by the LTC.

This signal can be provided locally by the building user manually pressing a button on the LTC, or remotely from a command sent by the CSC system.

The operation of the LTC assumed here is based on the operation of a typical thermostatic controller for a heat pump or electric immersion heater and is described as follows:
- the LTC switches on the EHD upon receiving a "HEAT NOW" command, or automatically upon detecting that the TES temperature has dropped below a lower limit value equal to the heating setpoint temperature minus the hysteresis band.
- the LTC switches off the EHD upon detecting that the TES temperature has risen above the heating setpoint temperature.

Each LTC sends information at regular intervals to the CSC system about the current status of the respective EHD and TES:
- EHD current status active or inactive.
- current temperature of the TES, as measured by temperature sensor.

Each LTC also receives the following control actions from the CSC system in demand response operation:
- Heating setpoint temperature adjustment.
- HEAT NOW activation command.

The CSC system control algorithm can use the following parameters:
- a control interval which is a minimum time interval between control actions, wherein the control interval is set to be greater than or equal to a time interval at which information is exchanged between the cloud-based controller (CSC) and the local thermostatic controller (LTCs);
- a value (N_{active}) representing the amount of local electrical heating devices (EHDs) that are currently active in providing heating;
- a value (N_{req}) representing the amount of local electrical heating devices (EHDs) that are requested for demand response operation;
- a maximum value (Nₘₐₓ) representing the maximum amount of local electrical heating devices (EHDs) that can be activated for demand response;
- a maximum value (N_{step,max}) representing the maximum amount of local electrical heating devices (EHDs) that can be activated in a single control interval;
- a heating setpoint temperature (T_{sp,dr}) implemented on each local thermostatic controller (LTC) during a demand response operation, wherein said heating setpoint temperature (T_{sp,dr}) displaces a previous value of the heating setpoint temperature (Tₛₚ,ₚᵣₑᵥ) that is stored in the memory of the cloud-based controller (CSC) and reapplied to the local thermostatic controller (LTC) when a demand response operation is finished;
- a value (ΔT_{drop,min}) by which the temperature of the local thermal energy store (TES) is allowed to drop after a previous demand response operation before a demand response operation can be implemented again on a respective local electrical heating device (EHD).

### Example 2 - Inventive system comprising a diesel-based generator

In a further specific example of a system according to the invention, the electrical-energy exchange means consists of a diesel-based generator. In this case, the wide-area macrogrid of Figure 1 is replaced by a diesel-based generator. This system can describe a microgrid operating in "island mode", where there is no connection to a wider area macrogrid. In such instance, there is no import or export of electricity to or from a wider area grid, but only an import of electricity from a diesel-based generator. Thus, any deficit in local RES generation is met by the diesel-based generator. Any surplus of local RES generation is curtailed through conventional means.

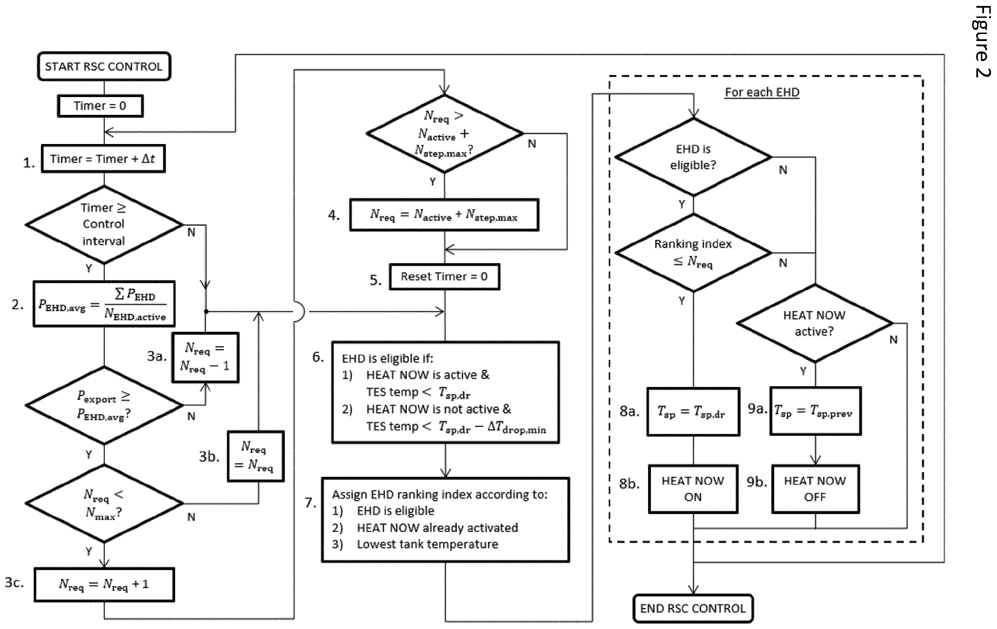

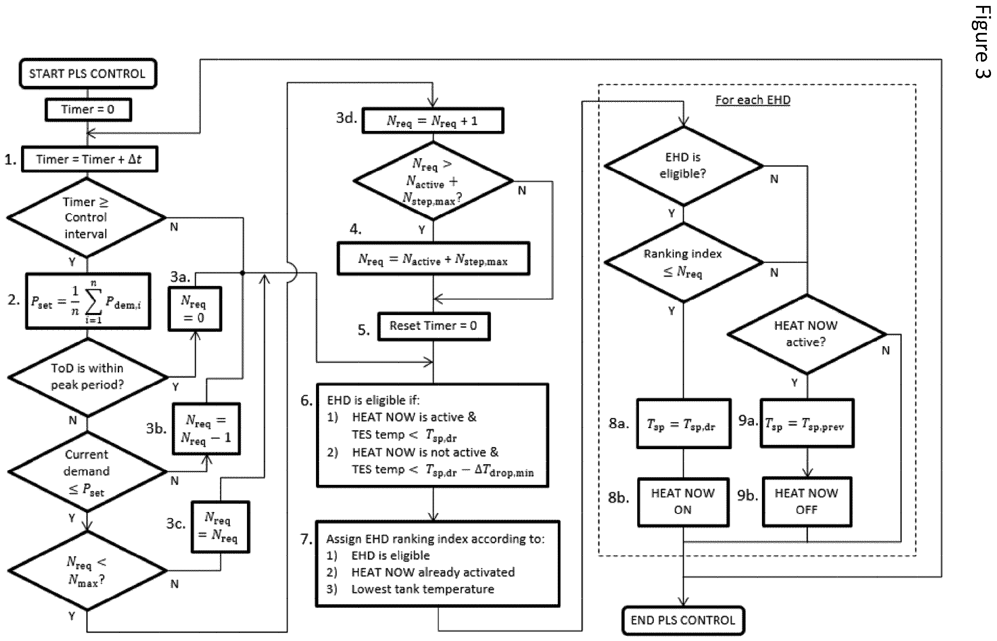

In such an application the RSC and PLS variants of the control method may still be applied, with the objectives modified as follows:
a. for RSC control the objective is to minimise curtailment rather than grid export, thus in Fig. 2 exported power Pₑₓₚₒᵣₜ is replaced with curtailed power, P_{curtail}. This may not be directly measurable but can be estimated dynamically based on environmental conditions and operating characteristics of the RES generators.
b. for PLS control the objective is to minimise demand peaks in order to reduce the sizing and operational requirements for backup generation plant using the same control method as presented in Fig. 3.

### Example 3 - Renewables self-consumption (RSC) operation mode executed by the cloud-based supervisory control (CSC) system

In the renewables self-consumption (RSC) operation mode, an objective is to achieve maximum self-consumption from local RES generators supplying the microgrid (minimum import/export from the wider area grid), i.e. to minimise imported electricity at a specific point in time.

A control method implemented by the CSC system in the renewables self-consumption (RSC) operation mode is described below and illustrated in Figure 2:
1. After starting DR control operation, the time accumulated in the timer since the previous control action is compared to the control interval. New requests for additional EHDs to perform demand response are only issued by the CSC system when the timer value is greater than or equal to the control interval.
2. If the timer value is greater than or equal to the control interval, the present average consumption of the individual EHDs, *P*_{EHD,avg}, is calculated by dividing present total consumption of all EHDs by the number EHDs presently active. The average consumption is used to predict how many EHDs should be activated or deactivated in order to balance supply and demand (note that where the EHD is an air source heat pump, the instantaneous electrical consumption may vary based on the difference between TES temperature and outdoor air temperature).
3. Based on the current state of the microgrid and net import/export of electricity:
   a. If the present value of electrical power exported from the microgrid Pₑₓ₋ₚₒᵣₜ is less than *P*_{EHD,avg}, then the number of EHDs requested for demand response N_{req} is decreased by 1.
   b. If Pₑₓₚₒᵣₜ is greater than or equal to *P*_{EHD,avg}, and the present value of N_{req} is equal to the maximum value Nₘₐₓ, N_{req} is maintained at its present value.
   c. If Pₑₓₚₒᵣₜ is greater than or equal to *P*_{EHD,avg} and the present value of N_{req} is less than Nₘₐₓ, N_{req} is increased by 1.
4. If the difference between the new value of N_{req} and the current number of EHDs currently active N_{active} is larger the maximum control step N_{step,max}, the value N_{req} is set equal to N_{active} + N_{step,max}.
5. If N_{req} has been increased relative to the previous time interval, the timer is reset to zero.
6. EHDs are assessed for eligibility criteria based on their current status (active or inactive) and the measured temperature of the associated TES. Each EHD is eligible if the HEAT NOW command is already activated and the associated TES temperature is below the demand response setpoint *T*_{sp,dr}, or if HEAT NOW is not presently activated and the associated TES temperature is less than *T*_{sp,dr}, minus the allowable temperature drop ΔT_{drop,min}.
7. The EHDs are then ranked according to (i) eligibility, (ii) status (HEAT NOW active/inactive), and (iii) TES temperature (lower ranking index number indicates higher ranking priority, e.g index = 1 indicates highest ranking). Currently active EHDs are assigned higher ranking priority over inactive EHDs, allowing them to complete their current heating cycle and thereby avoiding overly frequent on/off switching of EHDs.
8. EHDs are then assessed individually according to their ranking index, such that all eligible EHDs with a ranking index less or equal to N_{req} receive the following control actions:
   a. Heating setpoint temperature value *T*ₛₚ stored by the LTC is set to the demand response value *T*_{sp,dr}. The previous value of *T*ₛₚ in regular operating mode is stored by the CSC as *T*_{sp,prev} so that it can this value can be restored to the LTC when demand response operation finishes.
   b. The EHD is activated using the HEAT NOW command (or maintained active if HEAT NOW is already activated).
9. All EHDs that are not eligible, or have a ranking index higher than N_{req} receive the following control actions:
   a. Set temperature value in the LTC is restored to the previous value *T*_{sp,prev} (prior to DR operation).
   b. HEAT NOW is set inactive or maintained inactive.

### Example 4 - Peak-load shifting (PLS) operation mode executed by the cloud-based supervisory control (CSC) system

In the peak-load shifting (PLS) operation mode, an objective is not only to minimise imported electricity at a specific point in time to run the system more economically and ecologically, but also to minimise peaks in electricity demand by charging the TES during periods of low demand, i.e. to modulate total electricity demand to match a set value to prevent demand spikes and a possible occurrence of a power failure (blackout) in the electrical-energy exchange means (e.g. of a regional-scale or national-scale macrogrid) which is connected to the system. In short, an advantage of this operation mode is that a more stable total electricity demand (e.g. over the diurnal period) and a reduction in the peak requirement for import of electricity from a wider area macrogrid is provided.

The operating principle is to minimise electricity demand during pre-defined "peak" hours by pre-charging the TES devices prior to these peak hours. This assumes that the EHDs constitute a significant proportion of consumption during the peak hours that can be shifted to periods of lower demand by pre-charging the TES.

The control method implemented by the CSC system in the peak-load shifting (PLS) operation mode is described below and illustrated in Figure 3 (In the example given here, the set value is taken to be the running-average total demand over the previous 24 hours):
1. After starting DR control operation, the time accumulated in the timer since the previous control action is compared to the control interval. New requests for additional EHDs to perform demand response are only issued by the CSC system when the timer value is greater than or equal to the control interval.
2. If the timer value is greater than or equal to the control interval, the target set value for electrical power demand Pₛₑₜ is calculated as the average of the total electrical power demand for the entire microgrid P_{dem} over the previous n measurement intervals (here assumed equivalent to the previous 24 hours).
3. Based on the current time of day, ToD, and target electricity demand value Pₛₑₜ:
   a. If the current time of dayToD is within the pre-defined peak demand period, the number of EHDs requested for demand operation N_{req} is set to zero.
   b. If the current time of day is outside of the pre-defined peak period, and the current demand is greater than the target value _{Pₛₑₜ}, N_{req} is decreased by 1.
   c. If the current time of day is outside of the pre-defined peak period, the current demand is less than or equal to Pₛₑₜ, and the present value of N_{req} is equal to the maximum value Nₘₐₓ, N_{req} is maintained at its present value.
   d. If the current time of day is outside of the pre-defined peak period, the current demand is less than or equal to Pₛₑₜ, and the present value of N_{req} is less than Nₘₐₓ, N_{req} is increased by 1.
4. If the difference between the new value of N_{req} and the current number of EHDs currently active N_{active} is larger the maximum control step N_{step,max}, the value N_{req} is set equal to N_{active} + N_{S_{tep,max}}.
5. If N_{req} has been increased relative to the previous time interval, the timer is reset to zero.
6. EHDs are assessed for eligibility criteria based on their current status (active or inactive) and the measured temperature of the associated TES. Each EHD is eligible if the HEAT NOW command is already activated and the associated TES temperature is below the demand response setpoint *T*_{sp,dr}, or if HEAT NOW is not presently activated and the associated TES temperature is less than *T*_{sp,dr}, minus the allowable temperature drop ΔT_{drop,min}.
7. The EHDs are then ranked according to (i) eligibility, (ii) status (HEAT NOW active/inactive), and (iii) TES temperature (lower ranking index number indicates higher ranking priority, e.g index = 1 indicates highest ranking). Currently active EHDs are assigned higher ranking priority over inactive EHDs, allowing them to complete their current heating cycle and thereby avoiding overly frequent on/off switching of EHDs.
8. EHDs are then assessed individually according to their ranking index, such that all eligible EHDs with a ranking index less or equal to N_{req} receive the following control actions:
   a. Heating setpoint temperature value *T*ₛₚ stored by the LTC is set to the demand response value *T*_{sp,dr}. The previous value of *T*ₛₚ in regular operating mode is stored by the CSC as *T*_{sp,prev} so that it can this value can be restored to the LTC when demand response operation finishes.
   b. The EHD is activated using the HEAT NOW command (or maintained active if HEAT NOW is already activated).
9. All EHDs that are not eligible, or have a ranking index higher than N_{req}, receive the following control actions
   a. Set temperature value in the LTC is restored to the previous value *T*_{sp,prev} (prior to DR operation).
   b. HEAT NOW is set inactive or maintained inactive.

### List of reference signs and abbreviations

- EHD:: electrical heating device;
- LTC:: local thermostatic controller;
- TES:: thermal energy store;
- RES:: renewable energy system;
- NRES:: non-renewable energy system;
- CSC:: cloud-based supervisory control;
- RSC:: renewables self-consumption (refers to an operation mode);
- PLS:: peak-load shifting (refers to an operation mode);
- DR:: demand response;
- loT:: Internet of things;
- ToD:: current time of day;
- Pₛₑₜ:: set target value for electrical power demand;
- P_{dem}:: average of the total electrical power demand for the entire microgrid;
- P_{EHD}, _{avg}:: present average electrical power consumption of all EHDs;
- P_{EHD}:: present actual electrical power consumption of an EHD;
- Pₑₓₚₒᵣₜ:: present electrical power exported from the microgrid;
- N_{active}:: number of presently active EHDs (= N_{EHD, active});
- N_{req}:: number of EHDs requested for demand operation;
- Nₘₐₓ:: maximum number of EHDs that can be activated for demand response;
- Nₛₜₑₚ, ₘₐₓ:: maximum number of EHDs that can be activated in a single control interval;
- Tₛₚ:: heating setpoint temperature stored by an LTC;
- T_{sp,dr}:: heating setpoint temperature presently implemented by an LTC (during an operation mode);
- T_{sp, prev}:: heating setpoint temperature previously implemented by an LTC (prior to start of an operation mode);
- ΔT_{drop, min}:: temperature difference by which the temperature of a local TES is allowed to drop after a previous demand response operation, before a demand response operation can be implemented again.

## Claims

1. System for controlling a demand response of a plurality of electrical heating devices, comprising
a plurality of local electrical heating devices, EHDs, a plurality of local thermostatic controllers, LTCs, and a plurality of local energy stores TESs, wherein each electric heating device, EHD, is connected to and controlled by a respective local thermostatic controller, LTC, and is connected to and thermally coupled to an associated local thermal energy store, TES, wherein each local thermal energy store, TES, comprises a temperature sensor for detecting the temperature of the local thermal energy store, TES; a local renewable energy system, RES, generator which provides electricity to each of the plurality of local electrical heating devices, EHDs, via a decentralized electricity microgrid, wherein the decentralized electricity microgrid is electrically connected to an electrical-energy exchange means which is different to the local renewable energy system, RES, generator;
a cloud-based supervisory control, CSC, system which is configured to receive information about a degree of import and export of electricity between the electrical-energy exchange means and the local, decentralized electricity microgrid;
wherein the cloud-based supervisory control, CSC, system is configured to control each local thermostatic controller, LTC, by receiving and sending information to each local thermostatic controller, LTC,
**characterized in that** the cloud-based supervisory control, CSC, system is configured to activate, among all of the plurality of local electrical heating devices, EHDs, a specific amount of local electrical heating devices, EHDs, depending on a received information about the degree of import and export of electricity between the electrical-energy exchange means and the local, decentralized electricity microgrid at a specific point in time, and
perform an operation mode selected from a group consisting of a renewables self-consumption, RSC, operation mode and a peak-load shifting, PLS, operation mode.

2. System according to the preceding claim, **characterized in that**, after a start of either the renewables self-consumption, RSC, operation mode or the peak-load shifting, PLS, operation mode, the cloud-based supervisory control, CSC, system is configured to compare an amount of time that has elapsed since a previous control action, to a predetermined control interval, wherein, if the amount of time that has elapsed is
i) less than the predetermined control interval, the total number of local electrical heating devices, EHDs, considered in the operation mode is not reviewed or modified; and/or
ii) equal to or larger than the predetermined control interval, the total number of local electrical heating devices, EHDs, considered in the operation mode is reviewed and modified, wherein preferably the total number of local electrical heating devices, EHDs, considered in the operation mode is increased, is decreased, or is maintained the same.

3. System according to one of the preceding claims, **characterized in that**, in the renewables self-consumption, RSC, operation mode and/or in the peak-load shifting, PLS, operation mode, the cloud-based supervisory control, CSC, system is configured to exchange at least the following information with each local thermostatic controller, LTC:
i) a status of each local electrical heating device, EHD, preferably a status whether a local electrical heating device is currently active or inactive;
ii) a temperature of each local thermal energy store, TES;
iii) a control signal to adjust the heating setpoint value implemented in each local thermostatic controller, LTC; and
iv) a control action to activate a heating cycle on each local electrical heating device, EHD, via each local thermostatic controller, LTC.

4. System according to one of the preceding claims, **characterized in that**, in the renewables self-consumption, RSC, operation mode and/or in the peak-load shifting, PLS, operation mode, the cloud-based supervisory control, CSC, system is configured to receive information from at least one, preferably several, metering device which is located on the microgrid and which is suitable for measuring the quantity of electricity which is exported from the electricity microgrid to the electrical-energy exchange means and which is imported from the electrical-energy exchange means to the electricity microgrid.

5. System according to one of the preceding claims, **characterized in that**, in the renewables self-consumption, RSC, operation mode, the cloud-based supervisory control, CSC, system is configured to calculate a present average consumption, P_{EHD,avg}, of all of the local electrical heating devices, EHDs, that are presently active by dividing a present total consumption of all said devices, EHDs, by the number of said devices, EHDs, that are presently active, wherein the average consumption is used to predict how many of said devices, EHDs, should be activated or deactivated in order to balance import and export of electricity between the non-renewable-electrical-energy exchange means and the decentralized electricity microgrid, wherein said balancing is preferably performed as follows:
i) if the present value of electrical power exported from the microgrid, Pₑₓₚₒᵣₜ, is less than the calculated present average consumption, P_{EHD,avg}, a number of devices, EHDs, requested for activation for demand response, N_{req}, is decreased by 1; and/or
ii) if the present value of electrical power exported from the microgrid, Pₑₓₚₒᵣₜ, is greater than or equal to the calculated present average consumption, P_{EHD,avg}, and the present value of a number of devices, EHDs, requested for activation for demand response, N_{req}, is equal to a maximum value, Nₘₐₓ, representing the maximum amount of local electrical heating devices, EHDs, that can be activated for demand operation, a number of devices, EHDs, requested for activation for demand response, N_{req}, is maintained at its present value; and/or
iii) if the present value of electrical power exported from the microgrid, Pₑₓₚₒᵣₜ, is greater than or equal to the calculated present average consumption, P_{EHD,avg}, and the present value of a number of devices, EHDs, requested for activation for demand response, N_{req}, is less than maximum value, Nₘₐₓ, representing the maximum amount of local electrical heating devices, EHDs, that can be activated for demand operation, a number of devices, EHDs, requested for activation for demand response, N_{req}, is increased by 1;
wherein, preferably, if the difference between a new value of the number of devices, EHDs, requested for activation for demand response, N_{req}, and a current number of devices, EHDs, currently active, N_{active}, is larger than a maximum value, N_{step,max}, representing the maximum amount of local electrical heating devices, EHDs, that can be activated in a single control interval, a new value of the number of devices, EHDs, requested for activation for demand response, N_{req}, is set equal to the sum of the current number of devices, EHDs, currently active, N_{active}, and the maximum value, N_{step,max}, representing the maximum amount of devices, EHDs, that can be activated in a single control interval, wherein, especially, if the new value of the number of devices, EHDs, requested for activation for demand response, N_{req}, has been increased relative to a previous time interval, the timer is reset to zero.

6. System according to one of the preceding claims, **characterized in that**, in the peak-load shifting, PLS, operation mode, the cloud-based supervisory control, CSC, system is configured to calculate a target electricity demand value, Pₛₑₜ, from the average of the total electrical power demand for the entire microgrid, P_{dem}, over the previous n measurement intervals in a certain period of time, wherein n is an integer, wherein, based on a current time of day, ToD, and the target electricity demand value, Pₛₑₜ,
i) if the current time of day, ToD, is within a pre-defined peak demand period, the number of devices, EHDs, requested for activation for demand response, N_{req}, is set to zero; and/or
ii) if the current time of day, ToD, is outside of a pre-defined peak demand period and the current demand is greater than the target electricity demand value, Pₛₑₜ, the number of devices, EHDs, for activation for demand response, N_{req}, is decreased by one; and/or
iii) if the current time of day, ToD, is outside of a pre-defined peak demand period, the current demand is less than or equal to the target electricity demand value, Pₛₑₜ, and the present number of devices, EHDs, requested for activation for demand response, N_{req}, is equal to a maximum value, Nₘₐₓ, representing the maximum amount of local electrical heating devices, EHDs, that can be activated for demand operation, the number of devices, EHDs, requested for activation for demand response, N_{req}, is maintained at its present value; and/or
iv) if the current time of day, ToD, is outside of a pre-defined peak demand period, the current demand is less than or equal to the target electricity demand value, Pₛₑₜ, and the present number of devices, EHDs, requested for activation for demand response, N_{req}, is less than a maximum value, Nₘₐₓ, representing the maximum amount of local electrical heating devices, EHDs, that can be activated for demand operation, the number of devices, EHDs, requested for activation for demand response, Nreq, is increased by 1;
wherein, preferably, if the difference between a new value of the number of devices, EHDs, requested for activation for demand response, N_{req}, and a current number of devices, EHDs, currently active, N_{active}, is larger than a maximum value, N_{step,max}, representing the maximum amount of local electrical heating devices, EHDs, that can be activated in a single control interval, a new value of the number of devices, EHDs, requested for activation for demand response, N_{req}, is set equal to the sum of the current number of devices, EHDs, currently active, N_{active}, and the maximum value, N_{step,max}, representing the maximum amount of devices, EHDs, that can be activated in a single control interval, wherein, especially, if the new value of the number of devices, EHDs, requested for activation for demand response, N_{req}, has been increased relative to a previous time interval, the timer is reset to zero.

7. System according to the preceding claims, **characterized in that**, in the renewables self-consumption, RSC, operation mode and/or in the peak-load shifting, PLS, operation mode, the cloud-based supervisory control, CSC, system is configured to assess local electrical heating devices, EHDs, for eligibility criteria and to rank the local electrical heating devices, EHDs, based on their eligibility, wherein a lower ranking index number indicates a higher ranking priority, optionally an index of 1 indicates a highest ranking, wherein the eligibility criteria of the local electrical heating devices, EHDs, are preferably determined by
i) their status being active or inactive, wherein currently active local electrical heating devices, EHDs, are assigned to a higher ranking priority over currently inactive local electrical heating devices, EHDs; and
ii) a current temperature of the local thermal energy store, TES, to which they are connected, wherein local electrical heating devices, EHDs, connected to a local thermal energy store, TES, having a lower temperature are assigned to a higher ranking priority over local electrical heating devices, EHDs, connected to a local thermal energy store, TES, having a higher temperature;
wherein, especially, a local electrical heating device, EHD, is eligible if its current status is active and the current temperature of its local thermal energy store, TES, is below a heating setpoint temperature, T_{sp,dr}, or is eligible if its current status is inactive and the current temperature of its local thermal energy store, TES, is below a heating setpoint temperature, T_{sp,dr}, minus a value, ΔT_{drop,min}, by which the temperature of the local thermal energy store, TES, is allowed to drop after a previous operation mode.

8. System according to the preceding claim, **characterized in that**, in the renewables self-consumption, RSC, operation mode and/or in the peak-load shifting, PLS, operation mode, the cloud-based supervisory control, CSC, system is configured to assess local electrical heating devices, EHDs, individually according to their ranking index, such that the controller is configured to submit to
i) all local electrical heating devices, EHDs. that are eligible and have a ranking index less or equal to a value, N_{req}, which represents the amount of local electrical heating devices, EHDs, that are requested for the operation mode, the following control actions:
Setting of a heating setpoint temperature value, Tₛₚ, stored by the local thermostatic controller, LTC, to a demand response value, T_{sp,dr}, and storing the previous heating setpoint temperature value, Tₛₚ, in regular operating mode as previous heating setpoint temperature value, T_{sp,prev}, so that this value can be restored to the local thermostatic controller, LTC, when demand response operation mode finishes; Activating the local electrical heating devices, EHDs, or, if already active, maintaining the local electrical heating devices, EHDs, active; and
Deactivating the local electrical heating devices, EHDs, when a setpoint temperature is reached; and/or
ii) all local electrical heating devices, EHDs, that are not eligible, or are eligible and have a ranking index higher than a value, N_{req}, which represents the amount of local electrical heating devices, EHDs, that are requested for demand response operation mode, receive the following control actions:
Restoring a temperature value set in the local thermostatic controller, LTC, to a previous heating setpoint temperature value, T_{sp,prev}, prior to the operation mode;
Deactivating the local electrical heating devices, EHDs, or, if not active, maintaining the local electrical heating devices, EHDs, inactive.

9. System according to one of the preceding claims, **characterized in that** each local thermostatic controller, LTC, is configured to control an operation mode of the local electrical heating devices, EHD, to which it is connected based on at least the following information:
i) a representative temperature value which is measured by a temperature sensor of each local thermal energy store, TES, and communicated to the local thermostatic controller, LTC;
ii) an adjustable heating setpoint temperature value stored by the local thermostatic controller, LTC;
iii) an adjustable hysteresis band stored by the local thermostatic controller, LTC; and
iv) a heating activation command upon detecting that the representative temperature value has dropped below a lower limit value equal to the heating setpoint temperature minus the hysteresis band and/or upon receiving a "HEAT NOW" signal from the cloud-based supervisory control, CSC, system or from a user; and
v) a heating deactivation command upon detecting that the representative temperature has risen above the heating setpoint temperature and/or upon receiving a "HEAT OFF" signal from the cloud-based supervisory control, CSC, system or from a user.

10. System according to one of the preceding claims, **characterized in that** each local thermostatic controller, LTC, is configured to receive at least the following control parameters from the cloud-based supervisory control, CSC, system:
i) a heating setpoint temperature for controlling its connected local thermal energy store, TES, wherein the heating setpoint temperature is a temperature above which the local electrical heating devices, EHD, is deactivated; and
ii) a "HEAT NOW" instruction upon which the local electrical heating devices, EHD, is activated and remains active until the temperature of the local thermal energy store, TES, reaches the heating setpoint temperature.

11. System according to one of the preceding claims, **characterized in that** each local thermostatic controller, LTC, is configured to send information about a current status of the local electrical heating device, EHD, to which it is connected and a current status of the local thermal energy store, TES, to which it is connected to the cloud-based supervisory control, CSC, system at regular intervals, wherein the current status is preferably
i) a status whether the local electrical heating device, EHD, is currently active or inactive; and/or
ii) a status about the current temperature of the local thermal energy store, TES, as determined by its temperature sensor.

12. System according to one of the preceding claims, **characterized in that** the cloud-based supervisory control, CSC, system comprises at least one of, preferably all, of the following functions and/or parameters:
i) a programmable control logic function that allows actions to be performed based on true/false Boolean conditions;
ii) a timer function that measures the elapsed time and can be reset according to aforementioned true/false Boolean conditions;
iii) a "sort" function that applies a ranking index to each local electrical heating devices, EHD, based on a multiple attributes prioritised within the control logic;
iv) tuneable parameters for control including: a control time interval; a maximum control increment, and a boosted setpoint temperature applied to the local controller of each of local electrical heating devices, EHD;
v) a memory function that allows the cloud-based supervisory control, CSC, system to store earlier setpoint temperature values applied to each local thermostatic controller, LTC, prior to a demand-response heating operation being activated, and later to restore these previous values to the internal settings of each local thermostatic controller when the demand-response heating operation is deactivated;
vi) a clock function that provides the current time of day, preferably a 24-hour clock; and
vii) Microgrid-level diagnostic functions, specifically an ability to calculate the average total demand for electrical power over a defined historic time period, preferably the previous 24 hours.

13. System according to one of the preceding claims, **characterized in that** the electrical-energy exchange means comprises or consists of
i) a wide-area macrogrid, preferably regional-scale macrogrid or national-scale macrogrid; and/or
ii) a non-renewable energy system, NRES, generator, optionally a diesel-based or petrol-based generator, further optionally in combination with a means for storing energy, preferably a secondary battery and/or a capacitor, wherein in a case in which the means for storing energy is absent from said non-renewable-electrical-energy exchange means or has reached its full electrical charge capacity, the exported power, Pₑₓₚₒᵣₜ, is a curtailed power, P_{curtailed}.

14. System according to one of the preceding claims, **characterized in that** each one of the plurality of local electrical heating devices, EHDs, is a device capable of converting electricity into storable heat, wherein the device capable of converting electricity into storable heat is preferably selected from the group consisting of electric immersion heater, vapour-compression heat pump, thermoelectric devices and combinations thereof.

15. System according to one of the preceding claims, **characterized in that** each one of the local thermal energy store, TESs, is a vessel containing a medium capable of storing heat within a desired temperature range, wherein the vessel is preferably selected from the group consisting of domestic hot water cylinder, heat transfer fluid buffer vessel, phase change material, PCM, store, packed bed storage vessel and combinations thereof.

16. Use of the system according to one of the preceding claims for controlling a demand response of a plurality of electrical heating devices.

## Patentansprüche

1. System zur Regelung einer Nachfragereaktion einer Vielzahl von elektrischen Heizeinrichtungen, umfassend:
eine Vielzahl von lokalen elektrischen Heizeinrichtungen, EHDs, eine Vielzahl von lokalen Thermostatreglern, LTCs, und eine Vielzahl von lokalen Energiespeichern, TESs, wobei jede elektrische Heizeinrichtung, EHD, mit einem entsprechenden lokalen Thermostatregler, LTC, verbunden ist und von diesem geregelt wird, und mit einem zugehörigen lokalen Wärmeenergiespeicher, TES, verbunden und thermisch gekoppelt ist, wobei jeder lokale Wärmeenergiespeicher, TES, einen Temperatursensor zum Erfassen der Temperatur des lokalen Wärmeenergiespeichers, TES, enthält;
einen Generator für ein Lokales-Erneuerbare-Energien-System, RES, der über ein dezentrales Elektrizitätsmikronetz Elektrizität an jede der Vielzahl von lokalen elektrischen Heizeinrichtungen, EHDs, liefert, wobei das dezentrale Elektrizitätsmikronetz elektrisch mit einem Elektrische-Energie-Austauschmittel verbunden ist, das sich von dem Generator für das Lokale-Erneuerbare-Energien-System, RES, unterscheidet;
ein Cloud-basiertes Überwachungsregelungssystem, CSC, das konfiguriert ist, Informationen über einen Grad des Imports und Exports von Elektrizität zwischen dem Elektrische-Energie-Austauschmittel und dem lokalen, dezentralen Elektrizitätsmikronetz zu empfangen;
wobei das Cloud-basierte Überwachungsregelungssystem, CSC, konfiguriert ist, jeden lokalen Thermostatregler, LTC, durch Empfangen und Senden von Informationen an jeden lokalen Thermostatregler, LTC, zu steuern,
**dadurch gekennzeichnet, dass**
das Cloud-basierte Überwachungsregelungssystem, CSC, konfiguriert ist,
unter allen der Vielzahl von lokalen elektrischen Heizeinrichtungen, EHDs, eine bestimmte Menge lokaler elektrischer Heizeinrichtungen, EHDs, in Abhängigkeit von einer empfangenen Information über den Grad des Imports und Exports von Elektrizität zwischen dem Elektrische-Energie-Austauschmittel und dem lokalen, dezentralen Elektrizitätsmikronetz zu einem bestimmten Zeitpunkt, zu aktivieren, und
einen Betriebsmodus ausführen, der aus einer Gruppe ausgewählt ist, die aus einem Betriebsmodus für Erneuerbare-Energien-Eigenverbrauch, RSC, und einem Betriebsmodus für Spitzenlastverlagerung, PLS, besteht.

2. System nach dem vorangehenden Anspruch, **dadurch gekennzeichnet, dass** nach einem Start entweder des Betriebsmodus für Erneuerbare-Energien-Eigenverbrauch, RSC, oder des Betriebsmodus für Spitzenlastverlagerung, PLS, das Cloud-basierte Überwachungsregelungssystem, CSC, konfiguriert ist, eine Zeitspanne, die seit einer vorherigen Regelungsmaßnahme abgelaufen ist, mit einem vorgegebenen Regelungsintervall zu vergleichen, wobei, falls die abgelaufene Zeitspanne
i) kleiner als das vorgegebene Regelungsintervall ist, die Gesamtzahl der in dem Betriebsmodus berücksichtigten lokalen elektrischen Heizeinrichtungen, EHDs, nicht überprüft oder geändert wird; und/oder
ii) gleich oder größer als das vorgegebene Regelungsintervall ist, die Gesamtzahl der in dem Betriebsmodus berücksichtigten lokalen elektrischen Heizeinrichtungen, EHDs, überprüft und geändert wird, wobei vorzugsweise die Gesamtzahl der in dem Betriebsmodus berücksichtigten lokalen elektrischen Heizeinrichtungen, EHDs, erhöht wird, verringert wird oder gleichbleibend gehalten wird.

3. System nach einem der vorangehenden Ansprüche, **dadurch gekennzeichnet, dass** das Cloud-basierte Überwachungsregelungssystem, CSC, in dem Betriebsmodus für Erneuerbare-Energie-Eigenverbrauch, RSC, und/oder in dem Betriebsmodus für Spitzenlastverlagerung, PLS, konfiguriert ist, zumindest die folgenden Informationen mit jedem lokalen Thermostatregler, LTC, auszutauschen:
i) einen Status jeder lokalen elektrischen Heizeinrichtung, EHD, vorzugsweise einen Status, ob eine lokale elektrische Heizeinrichtung gerade aktiv ist oder inaktiv ist;
ii) eine Temperatur jedes lokalen Wärmeenergiespeichers, TES;
iii) ein Steuerungssignal zur Anpassung des Heiz-Sollwerts, der in jedem lokalen Thermostatregler, LTC, implementiert ist; und
iv) eine Steuerungsmaßnahme zur Aktivierung eines Heizzyklus an jeder lokalen elektrischen Heizeinrichtung, EHD, über jeden lokalen Thermostatregler, LTC.

4. System nach einem der vorangehenden Ansprüche, **dadurch gekennzeichnet, dass** das Cloud-basierte Überwachungsregelungssystem, CSC, konfiguriert ist, in dem Betriebsmodus für Erneuerbare-Energien-Eigenverbrauch, RSC, und/oder in dem Betriebsmodus für Spitzenlastverlagerung, PLS, Informationen von mindestens einer, vorzugsweise mehreren, Messeinrichtung zu empfangen, die sich auf dem Mikronetz befindet und die geeignet ist, die Elektrizitätsmenge zu messen, die aus dem Elektrizitätsmikronetz in das Elektrische-Energie-Austauschmittel exportiert wird, und die von dem Elektrische-Energie-Austauschmittel in das Elektrizitätsmikronetz importiert wird.

5. System nach einem der vorangehenden Ansprüche, **dadurch gekennzeichnet, dass** das Cloud-basierte Überwachungsregelungssystem, CSC, in dem Betriebsmodus für Erneuerbare-Energien-Eigenverbrauch, RSC, konfiguriert ist, einen gegenwärtigen Durchschnittsverbrauch, P_{EHD,avg}, aller lokalen elektrischen Heizeinrichtungen, EHDs, die gerade aktiv sind, durch Dividieren eines gegenwärtigen Gesamtverbrauchs aller Einrichtungen, EHDs, durch die Anzahl der Einrichtungen, EHDs, die gerade aktiv sind, zu berechnen, wobei der Durchschnittsverbrauch verwendet wird, um vorherzusagen, wie viele der Einrichtungen, EHDs, aktiviert oder deaktiviert werden sollten, um den Import und Export von Elektrizität zwischen dem Nicht-Erneuerbare-Energien-Austauschmittel und dem dezentralen Elektrizitätsmikronetz auszugleichen, wobei der Ausgleich vorzugsweise wie folgt durchgeführt wird:
i) falls der gegenwärtige Wert der aus dem Mikronetz exportierten elektrischen Energie, Pₑₓₚₒᵣₜ, geringer ist als der berechnete gegenwärtige Durchschnittsverbrauch, P_{EHD,avg}, eine Anzahl von Einrichtungen, EHDs, die zur Aktivierung der Nachfragereaktion angefordert sind, N_{req}, um 1 verringert wird; und/oder
ii) falls der gegenwärtige Wert der aus dem Mikronetz exportierten elektrischen Energie, Pₑₓₚₒᵣₜ, größer oder gleich dem berechneten gegenwärtigen Durchschnittsverbrauch, P_{EHD,avg}, ist, und der gegenwärtige Wert einer Anzahl von Einrichtungen, EHDs, die zur Aktivierung der Nachfragereaktion, N_{req}, angefordert sind, gleich einem Maximalwert, Nₘₐₓ, ist, welcher die maximale Menge an lokalen elektrischen Heizeinrichtungen, EHDs, darstellt, die für den Nachfragebetrieb aktiviert werden können, eine Anzahl von Einrichtungen, EHDs, die zur Aktivierung der Nachfragereaktion, N_{req}, angefordert sind, auf ihrem gegenwärtigen Wert gehalten werden; und/oder
iii) falls der gegenwärtige Wert der aus dem Mikronetz exportierten elektrischen Energie, Pₑₓₚₒᵣₜ, größer oder gleich dem berechneten gegenwärtigen Durchschnittsverbrauch, P_{EHD,avg}, ist, und der gegenwärtige Wert einer Anzahl von Einrichtungen, EHDs, die zur Aktivierung der Nachfragereaktion, N_{req}, angefordert sind, kleiner als der Maximalwert, Nₘₐₓ, ist, welcher die maximale Menge an lokalen elektrischen Heizeinrichtungen, EHDs, darstellt, die für den Nachfragebetrieb aktiviert werden können, eine Anzahl von Einrichtungen, EHDs, die zur Aktivierung der Nachfragereaktion, N_{req}, angefordert sind, um 1 erhöht wird;
wobei vorzugsweise, falls die Differenz zwischen einem neuen Wert der Anzahl von Einrichtungen, EHDs, die zur Aktivierung der Nachfragereaktion, N_{req}, angefordert sind, und einer aktuellen Anzahl von Einrichtungen, EHDs, die gerade aktiv sind, N_{active}, größer als ein Maximalwert, N_{step,max}, ist, welcher die maximale Menge an lokalen elektrischen Heizeinrichtungen, EHDs, darstellt, die in einem einzigen Regelungsintervall aktiviert werden können, ein neuer Wert der Anzahl von Einrichtungen, EHDs, die zur Aktivierung der Nachfragereaktion, N_{req}, angefordert sind, gleich der Summe aus der aktuellen Anzahl von Einrichtungen, EHDs, die gerade aktiv sind, N_{active}, und dem Maximalwert, N_{step,max}, welcher die maximale Menge von Einrichtungen, EHDs, darstellt, die in einem einzigen Regelungsintervall aktiviert werden können, gesetzt wird, wobei insbesondere dann, falls der neue Wert der Anzahl von Einrichtungen, EHDs, die zur Aktivierung der Nachfragereaktion, N_{req}, angefordert sind, relativ zu einem vorherigen Zeitintervall erhöht wurde, der Zeitgeber auf Null zurückgesetzt wird.

6. System nach einem der vorangehenden Ansprüche, **dadurch gekennzeichnet, dass** das Cloud-basierte Überwachungsregelungssystem, CSC, im Betriebsmodus für Spitzenlastverlagerung, PLS, konfiguriert ist, einen Zielelektrizität-Nachfragewert, Pₛₑₜ, aus dem Durchschnitt der gesamten elektrischen Energienachfrage für das Gesamt-Mikronetz, P_{dem}, über die vorherigen n Messintervalle in einem bestimmten Zeitraum zu berechnen, wobei n eine ganze Zahl ist, wobei, basierend auf einer aktuellen Tageszeit, ToD, und dem Zielelektrizität-Nachfragewert, Pₛₑₜ,
i) falls die aktuelle Tageszeit, ToD, innerhalb eines vordefinierten Spitzennachfragezeitraums liegt, die Anzahl von Einrichtungen, EHDs, die zur Aktivierung der Nachfragereaktion, N_{req}, angefordert sind, auf Null gesetzt wird; und/oder
ii) falls die aktuelle Tageszeit, ToD, außerhalb eines vordefinierten Spitzennachfragezeitraums liegt, und die gegenwärtige Nachfrage größer als der Zielelektrizität-Nachfragewert, Pₛₑₜ, ist, die Anzahl von Einrichtungen, EHDs, zur Aktivierung der Nachfragereaktion, N_{req}, um Eins verringert wird; und/oder
iii) falls die aktuelle Tageszeit, ToD, außerhalb eines vordefinierten Spitzennachfragezeitraums liegt, die aktuelle Nachfrage kleiner oder gleich dem Zielelektrizität-Nachfragewert, Pₛₑₜ, ist, und die gegenwärtige Anzahl von Einrichtungen, EHDs, die zur Aktivierung der Nachfragereaktion, N_{req}, angefordert sind, gleich einem Maximalwert, N_{maχ}, ist, welcher die maximale Menge lokaler elektrischer Heizeinrichtungen, EHDs, darstellt, die für den Nachfragebetrieb aktiviert werden können, die Anzahl von Einrichtungen, EHDs, die zur Aktivierung der Nachfragereaktion, N_{req}, angefordert sind, auf ihrem gegenwärtigen Wert gehalten werden; und/oder
iv) falls die aktuelle Tageszeit, ToD, außerhalb eines vordefinierten Spitzennachfragezeitraums liegt, die aktuelle Nachfrage kleiner oder gleich dem Zielelektrizität-Nachfragewert, Pₛₑₜ, ist, und die gegenwärtige Anzahl von Einrichtungen, EHDs, die zur Aktivierung der Nachfragereaktion, N_{req}, angefordert sind, gleich einem Maximalwert, N_{maχ}, ist, welcher die maximale Menge an lokalen elektrischen Heizeinrichtungen, EHDs, darstellt, die für den Nachfragebetrieb aktiviert werden können, die Anzahl der Einrichtungen, EHDs, die zur Aktivierung der Nachfragereaktion, N_{req}, angefordert sind, um 1 erhöht wird;
wobei vorzugsweise, falls die Differenz zwischen einem neuen Wert der Anzahl von Einrichtungen, EHDs, die zur Aktivierung der Nachfragereaktion, N_{req}, angefordert sind, und einer aktuellen Anzahl von Einrichtungen, EHDs, die gerade aktiv sind, N_{active}, größer als ein Maximalwert, N_{step,max}, ist, welcher die maximale Anzahl lokaler elektrischer Heizeinrichtungen, EHDs, darstellt, die in einem einzigen Regelungsintervall aktiviert werden können, ein neuer Wert der Anzahl von Einrichtungen, EHDs, die zur Aktivierung der Nachfragereaktion, N_{req}, angefordert sind, gleich der Summe aus der aktuellen Anzahl von Einrichtungen, EHDs, die gerade aktiv sind, N_{active}, und dem Maximalwert, N_{step,max}, welcher die maximale Menge an Einrichtungen, EHDs, darstellt, die in einem einzigen Regelungsintervall aktiviert werden können, gesetzt wird, wobei insbesondere dann, falls der neue Wert der Anzahl von Einrichtungen, EHDs, die zur Aktivierung der Nachfragereaktion, N_{req}, angefordert sind, relativ zu einem vorherigen Zeitintervall erhöht wurde, der Zeitgeber auf Null zurückgesetzt wird.

7. System nach einem der vorangehenden Ansprüche, **dadurch gekennzeichnet, dass** das Cloud-basierte Überwachungsregelungssystem, CSC, im Betriebsmodus für Erneuerbare-Energien-Eigenverbrauch, RSC, und/oder im Betriebsmodus für Spitzenlastverlagerung, PLS, konfiguriert ist, lokale elektrische Heizeinrichtungen, EHD, nach Eignungskriterien zu bewerten, und die lokalen elektrischen Heizeinrichtungen, EHD, basierend auf ihrer Eignung in eine Rangfolge zu bringen, wobei eine niedrigere Rangfolge-Indexzahl eine höhere Rangfolgepriorität anzeigt, optional ein Index von 1 eine höchste Rangfolge anzeigt, wobei die Eignungskriterien der lokalen elektrischen Heizeinrichtungen, EHDs, vorzugsweise bestimmt werden durch
i) deren Status, welcher aktiv oder inaktiv ist, wobei gerade aktiven lokalen elektrischen Heizeinrichtungen, EHDs, eine höhere Rangfolgepriorität zugewiesen ist als gerade inaktiven lokalen elektrischen Heizeinrichtungen, EHDs; und
ii) eine aktuelle Temperatur des lokalen Wärmeenergiespeichers, TES, mit dem sie verbunden sind, wobei lokalen elektrischen Heizeinrichtungen, EHDs, die mit einem lokalen Wärmeenergiespeicher, TES, verbunden sind, der eine niedrigere Temperatur hat, eine höhere Rangfolgepriorität zugewiesen ist als lokalen elektrischen Heizeinrichtungen, EHDs, die mit einem lokalen Wärmeenergiespeicher, TES, verbunden sind, der eine höhere Temperatur hat;
wobei insbesondere eine lokale elektrische Heizeinrichtung, EHD, geeignet ist, falls ihr aktueller Status aktiv ist und die aktuelle Temperatur ihres lokalen Wärmeenergiespeichers, TES, unterhalb einer Heizsolltemperatur, T_{sp,dr}, liegt, oder geeignet ist, falls ihr aktueller Status inaktiv ist und die aktuelle Temperatur ihres lokalen Wärmeenergiespeichers, TES, unterhalb einer Heizsolltemperatur, T_{sp,dr}, abzüglich eines Wertes, ΔT_{drop,min}, um den die Temperatur des lokalen Wärmeenergiespeichers, TES, nach einem vorherigen Betriebsmodus sinken darf, liegt.

8. System nach dem vorangehenden Anspruch, **dadurch gekennzeichnet, dass** das Cloud-basierte Überwachungsregelungssystem, CSC, im Betriebsmodus für Erneuerbare-Energie-Eigenverbrauch, RSC, und/oder im Betriebsmodus für Spitzenlastverlagerung, PLS, konfiguriert ist, lokale elektrische Heizeinrichtungen, EHD, individuell gemäß ihrem Rangordnungs-Index zu bewerten, so dass der Regler konfiguriert ist,
i) an alle lokalen elektrischen Heizeinrichtungen, EHDs, welche geeignet sind und einen Rangfolge-Index kleiner oder gleich einem Wert, N_{req}, haben, der die Menge an lokalen elektrischen Heizeinrichtungen, EHDs, darstellt, die für den Betriebsmodus angefordert sind, die folgenden Regelungsmaßnahmen zu übermitteln:
Setzen eines vom lokalen Thermostatregler, LTC, gespeicherten Heiz-Solltemperaturwertes, Tₛₚ, auf einen Nachfragereaktionswert T_{sp,dr}, und Speichern des vorherigen Heiz-Solltemperaturwertes T_{sp,dr} im regulären Betriebsmodus als vorherigen Heiz-Solltemperaturwert T_{sp,prev}, so dass dieser Wert an dem lokalen Thermostatregler, LTC, wiederhergestellt werden kann, wenn der Nachfragereaktion-Betriebsmodus endet;
Aktivieren der lokalen elektrischen Heizeinrichtungen, EHDs, oder, falls bereits aktiv, Aktivhalten der lokalen elektrischen Heizeinrichtungen, EHDs; und
Deaktivieren der lokalen elektrischen Heizeinrichtungen, EHDs, wenn eine Solltemperatur erreicht ist; und/oder
ii) alle lokalen elektrischen Heizeinrichtungen, EHDs, die nicht geeignet sind, oder die geeignet sind und einen Rangfolgeindex höher als einen Wert, N_{req}, haben, welcher die Menge an lokalen elektrischen Heizeinrichtungen, EHDs, darstellt, für welche der Nachfragereaktion-Betriebsmodus angefordert ist, die folgenden Reglungsmaßnahmen zu empfangen:
Wiederherstellen eines im lokalen Thermostatregler, LTC, gesetzten Temperaturwerts auf einen vorherigen Heiz-Solltemperaturwert, T_{sp,prev}, vor dem Betriebsmodus;
Deaktivieren der lokalen elektrischen Heizeinrichtungen, EHDs, oder, falls nicht aktiv, Inaktivhalten der lokalen elektrischen Heizeinrichtungen, EHDs.

9. System nach einem der vorangehenden Ansprüche, **dadurch gekennzeichnet, dass** jeder lokale Thermostatregler, LTC, konfiguriert ist, einen Betriebsmodus der lokalen elektrischen Heizeinrichtungen, EHD, mit welchen er verbunden ist, auf der Grundlage von zumindest den folgenden Informationen zu regeln:
i) einen repräsentativen Temperaturwert, der von einem Temperatursensor jedes lokalen Wärmeenergiespeichers,TES, gemessen wird, und an den lokalen Thermostatregler, LTC, übermittelt wird;
ii) einen einstellbaren Heiz-Solltemperaturwert, der vom lokalen Thermostatregler, LTC, gespeichert wird;
iii) ein einstellbares Hystereseband, das vom lokalen Thermostatregler, LTC, gespeichert wird; und
iv) einen Heiz-Aktivierungsbefehl, auf eine Erfassung, dass der repräsentative Temperaturwert unter einen unteren Grenzwert gefallen ist, der gleich der Heiz-Solltemperatur abzüglich des Hysteresebandes ist, und/oder auf Empfangen eines "JETZT-HEIZEN"-Signals von dem Cloud-basierten Überwachungsregelungssystem, CSC, oder von einem Benutzer; und
v) einen Heiz-Deaktivierungsbefehl, auf Erfassung, dass die repräsentative Temperatur über die Heiz-Solltemperatur gestiegen ist, und/oder auf Empfangen eines "HEIZEN-AUS"-Signals von dem Cloud-basierten Überwachungsregelungssystem, CSC, oder von einem Benutzer.

10. System nach einem der vorangehenden Ansprüche, **dadurch gekennzeichnet, dass** jeder lokale Thermostatregler, LTC, konfiguriert ist, zumindest die folgenden Regelungsparameter von dem Cloud-basierten Überwachungsregelungssystem, CSC, zu empfangen:
i) eine Heiz-Solltemperatur zur Regelung ihres verbundenen lokalen Wärmeenergiespeichers, TES, wobei die Heiz-Solltemperatur eine Temperatur ist, oberhalb derer die lokalen elektrischen Heizeinrichtungen, EHD, deaktiviert werden; und
ii) eine "JETZT-HEIZEN"-Anweisung, auf die hin die lokalen elektrischen Heizeinrichtungen, EHD, aktiviert werden und aktiv bleiben, bis die Temperatur des lokalen Wärmeenergiespeichers, TES, die Heiz-Solltemperatur erreicht.

11. System nach einem der vorangehenden Ansprüche, **dadurch gekennzeichnet, dass** jeder lokale Thermostatregler, LTC, konfiguriert ist, in regelmäßigen Intervallen Informationen über einen aktuellen Status der lokalen elektrischen Heizeinrichtung, EHD, mit welcher er verbunden ist, und einen aktuellen Status des lokalen Wärmeenergiespeichers, TES, mit welchen er verbunden ist, an das Cloud-basierte Überwachungsregelungssystem, CSC, zu senden, wobei der aktuelle Status vorzugsweise
i) ein Status darüber ist, ob die lokale elektrische Heizeinrichtung, EHD, gerade aktiv ist oder inaktiv ist; und/oder
ii) ein Status über die aktuelle Temperatur des lokalen Wärmeenergiespeichers, TES, wie von seinem Temperatursensor bestimmt, ist.

12. System nach einem der vorangehenden Ansprüche, **dadurch gekennzeichnet, dass** das Cloud-basierte Überwachungsregelungssystem, CSC, zumindest eines, vorzugsweise alle, der folgenden Funktionen und/oder Parameter enthält:
i) eine programmierbare Regelungslogikfunktion, welche Ausführung von Maßnahmen auf der Grundlage von Booleschen Wahr/Falsch-Bedingungen ermöglicht;
ii) eine Zeitgeber-Funktion, welche die abgelaufene Zeit misst und nach den oben genannten Booleschen Wahr/Fasch-Bedingungen zurückgesetzt werden kann;
iii) eine "Sortier"-Funktion, die auf der Grundlage mehrerer in der Regelungslogik priorisierter Attribute einen Rangordnungsindex auf jede lokale elektrische Heizeinrichtung, EHD, anwendet;
iv) abstimmbare Parameter für die Regelung, umfassend: ein Regelungszeitintervall; ein maximales Regelungsinkrement und eine erhöhte Solltemperatur, die auf den lokalen Regler jeder der lokalen elektrischen Heizeinrichtungen, EHD, angewendet wird;
v) eine Speicherfunktion, die es dem Cloud-basierten Überwachungsregelungssystem, CSC, ermöglicht, frühere Solltemperaturwerte zu speichern, die auf jeden lokalen Thermostatregler, LTC, angewendet wurden, bevor ein Nachfragereaktion-Heizbetrieb aktiviert wurde, und später diese vorherigen Werte in den Einstellungen jedes lokalen Thermostatreglers wiederherzustellen, wenn der Nachfragereaktion-Heizbetrieb deaktiviert wird;
vi) eine Uhrfunktion, welche die aktuelle Tageszeit bereitstellt, vorzugsweise eine 24-Stunden-Uhr; und
vii) Diagnosefunktionen auf Mikronetz-Ebene, insbesondere eine Fähigkeit, die durchschnittliche Gesamtnachfrage an elektrischer Energie über einen definierten historischen Zeitraum, vorzugsweise die letzten 24 Stunden, zu berechnen.

13. System nach einem der vorangehenden Ansprüche, **dadurch gekennzeichnet, dass** das Elektrische-Energie-Austauschmittel umfasst oder besteht aus:
i) einem weitflächigem Makronetz, vorzugsweise ein Makronetz regionaler Reichweite oder nationaler Reichweite; und/oder
ii) einen Generator für ein Nicht-Erneuerbare-Energien-System, NRES, optional einen Generator auf Dieselbasis oder Benzinbasis, ferner optional in Kombination mit einem Mittel zum Speichern von Energie, vorzugsweise einer Sekundärbatterie und/oder einem Kondensator, wobei in einem Fall, in dem das Mittel zum Speichern von Energie in dem Nicht-Erneuerbare-Energien-Elektrische-Energie-Austauschmittel nicht vorhanden ist oder seine volle elektrische Ladekapazität erreicht hat, die exportierte Energie, Pₑₓₚₒᵣₜ, eine eingeschränkte Energie, P_{curtailed}, ist.

14. System nach einem der vorangehenden Ansprüche, **dadurch gekennzeichnet, dass** jede einzelne der Vielzahl von lokalen elektrischen Heizeinrichtungen, EHDs, eine Einrichtung ist, die in der Lage ist, Elektrizität in speicherbare Wärme umzuwandeln, wobei die Einrichtung, die in der Lage ist, Elektrizität in speicherbare Wärme umzuwandeln, vorzugsweise aus der Gruppe ausgewählt ist, die aus einem elektrischen Tauchheizkörper, einer Dampfkompressionswärmepumpe, thermoelektrischen Einrichtungen und Kombinationen davon besteht.

15. System nach einem der vorangehenden Ansprüche, **dadurch gekennzeichnet, dass** jeder einzelne der lokalen Wärmeenergiespeicher, TESs, ein Behälter ist, der ein Medium enthält, das in der Lage ist, Wärme innerhalb eines gewünschten Temperaturbereichs zu speichern, wobei der Behälter vorzugsweise aus der Gruppe ausgewählt ist, die aus einem Brauchwarmwasserzylinder, einem Wärmeübertragungsfluid-Pufferbehälter, einem Phasenwechselmaterialspeicher, PCM, einem Festbettspeicherbehälter und Kombinationen davon besteht.

16. Verwendung des Systems nach einem der vorangehenden Ansprüche zur Regelung einer Nachfragereaktion einer Vielzahl von elektrischen Heizeinrichtungen.

## Revendications

1. Système pour commander une réponse à une demande d'une pluralité de dispositifs de chauffage électrique, comprenant
une pluralité de dispositifs de chauffage électrique, EHD, locaux, une pluralité de dispositifs de commande thermostatiques locaux, LTC, et une pluralité d'accumulateurs d'énergie locaux, TES, dans lequel chaque dispositif de chauffage électrique, EHD, est connecté à et commandé par un dispositif de commande thermostatique local, LTC, respectif, et est connecté à et couplé thermiquement à un accumulateur d'énergie thermique, TES, local associé, dans lequel chaque accumulateur d'énergie thermique, TES, local comprend un capteur de température pour détecter la température de l'accumulateur d'énergie thermique, TES, local ;
un générateur de système d'énergie renouvelable, RES, local qui fournit de l'électricité à chacun de la pluralité de dispositifs de chauffage électrique, EHD, locaux via un micro-réseau électrique décentralisé, dans lequel le micro-réseau électrique décentralisé est connecté électriquement à des moyens d'échange d'énergie électrique qui sont différents du générateur de système d'énergie renouvelable, RES, local ;
un système de commande de surveillance basé sur le cloud, CSC, qui est configuré pour recevoir des informations sur un degré d'importation et d'exportation d'électricité entre les moyens d'échange d'énergie électrique et le micro-réseau électrique décentralisé local ;
dans lequel le système de commande de surveillance basé sur le cloud, CSC, est configuré pour commander chaque dispositif de commande thermostatique local, LTC, en recevant et en envoyant des informations à chaque dispositif de commande thermostatique local, LTC,
**caractérisé en ce que**
le système de commande de surveillance basé sur le cloud, CSC, est configuré
pour activer, parmi l'ensemble de la pluralité de dispositifs de chauffage électrique, EHD, locaux, une quantité spécifique de dispositifs de chauffage électrique, EHD, locaux en fonction des informations reçues sur le degré d'importation et d'exportation d'électricité entre les moyens d'échange d'énergie électrique et le micro-réseau électrique décentralisé local à un moment spécifique, et
effectuer un mode de fonctionnement sélectionné dans un groupe comprenant un mode de fonctionnement d'autoconsommation d'énergies renouvelables, RSC, et un mode de fonctionnement de décalage de charge de pointe, PLS.

2. Système selon la revendication précédente, **caractérisé en ce qu'**après un démarrage du mode de fonctionnement d'autoconsommation d'énergies renouvelables, RSC, ou du mode de fonctionnement de décalage de charge de pointe, PLS, le système de commande de surveillance basé sur le cloud, CSC, est configuré pour comparer une quantité de temps qui s'est écoulée depuis une action de commande précédente, à un intervalle de commande prédéterminé, dans lequel, si la quantité de temps qui s'est écoulée est
i) inférieure à l'intervalle de commande prédéterminé, le nombre total de dispositifs de chauffage électrique, EHD, locaux pris en compte dans le mode de fonctionnement n'est ni revu ni modifié ; et/ou
ii) égale ou supérieure à l'intervalle de commande prédéterminé, le nombre total de dispositifs de chauffage électrique, EHD, locaux pris en compte dans le mode de fonctionnement est revu et modifié, dans lequel de préférence le nombre total de dispositifs de chauffage électrique, EHD, locaux pris en compte dans le mode de fonctionnement est augmenté, est diminué, ou est maintenu identique.

3. Système selon l'une des revendications précédentes, **caractérisé en ce que**, dans le mode de fonctionnement d'autoconsommation d'énergies renouvelables, RSC, et/ou dans le mode de fonctionnement de décalage de charge de pointe, PLS, le système de commande de surveillance basé sur le cloud, CSC, est configuré pour échanger au moins les informations suivantes avec chaque dispositif de commande thermostatique local, LTC :
i) un état de chaque dispositif de chauffage électrique, EHD, local, de préférence un état indiquant si un dispositif de chauffage électrique local est actuellement actif ou inactif ;
ii) une température de chaque accumulateur d'énergie thermique, TES, local ;
iii) un signal de commande pour ajuster la valeur de consigne de chauffage mise en œuvre dans chaque dispositif de commande thermostatique local, LTC ; et
iv) une action de commande pour activer un cycle de chauffage sur chaque dispositif de chauffage électrique, EHD, local via chaque dispositif de commande thermostatique local, LTC.

4. Système selon l'une des revendications précédentes, **caractérisé en ce que**, dans le mode de fonctionnement d'autoconsommation d'énergies renouvelables, RSC, et/ou dans le mode de fonctionnement de transfert de charge de pointe, PLS, le système de commande de surveillance basé sur le cloud, CSC, est configuré pour recevoir des informations d'au moins un, de préférence plusieurs, dispositif de mesure qui est situé sur le micro-réseau et qui est approprié pour mesurer la quantité d'électricité qui est exportée du micro-réseau électrique vers les moyens d'échange d'énergie électrique et qui est importée des moyens d'échange d'énergie électrique vers le micro-réseau électrique.

5. Système selon l'une des revendications précédentes, **caractérisé en ce que** dans le mode de fonctionnement d'autoconsommation d'énergies renouvelables, RSC, le système de commande basé sur le cloud, CSC, est configuré pour calculer une consommation moyenne actuelle, P_{EHD,avg}, de tous les dispositifs de chauffage électrique, EHD, locaux qui sont actuellement actifs en divisant une consommation totale actuelle de tous lesdits dispositifs, EHD, par le nombre desdits dispositifs, EHD, qui sont actuellement actifs, dans lequel la consommation moyenne est utilisée pour prédire combien desdits dispositifs, EHD, doivent être activés ou désactivés afin d'équilibrer l'importation et l'exportation d'électricité entre les moyens d'échange d'énergie électrique non renouvelable et le micro-réseau électrique décentralisé, dans lequel ledit équilibrage est de préférence effectué comme suit :
i) si la valeur actuelle de la puissance électrique exportée à partir du micro-réseau, Pexport, est inférieure à la consommation moyenne actuelle calculée, PEHD,avg, un certain nombre de dispositifs, EHD, faisant l'objet d'une requête d'activation pour une réponse à une demande, Nreq, est diminué de 1 ; et/ou
ii) si la valeur actuelle de la puissance électrique exportée à partir du micro-réseau, Pₑₓₚₒᵣₜ, est supérieure ou égale à la consommation moyenne actuelle calculée, P_{EHD,avg}, et la valeur actuelle d'un certain nombre de dispositifs, EHD, faisant l'objet d'une requête d'activation pour une réponse à une demande, N_{req}, est égale à une valeur maximale, N_{maχ}, représentant la quantité maximale de dispositifs de chauffage électrique, EHD, locaux pouvant être activés pour un fonctionnement à la demande, un certain nombre de dispositifs, EHD, faisant l'objet d'une requête d'activation pour une réponse à une demande, N_{req}, est maintenu à sa valeur actuelle ; et/ou
iii) si la valeur actuelle de la puissance électrique exportée à partir du micro-réseau, Pₑₓₚₒᵣₜ, est supérieure ou égale à la consommation moyenne actuelle calculée, P_{EHD,avg} et la valeur actuelle d'un certain nombre de dispositifs, EHD, faisant l'objet d'une requête d'activation pour une réponse à une demande, N_{req}, est inférieure à la valeur maximale, N_{maχ}, représentant la quantité maximale de dispositifs de chauffage électrique, EHD, locaux pouvant être activés pour un fonctionnement à la demande, un certain nombre de dispositifs, EHD, faisant l'objet d'une requête d'activation pour une réponse à une demande, N_{req}, est augmenté de 1 ;
dans lequel, de préférence, si la différence entre une nouvelle valeur du nombre de dispositifs, EHD, faisant l'objet d'une requête d'activation pour une réponse à une demande, N_{req}, et un nombre actuel de dispositifs, EHD, actuellement actifs, N_{active}, est supérieure à une valeur maximale, N_{step,max}, représentant la quantité maximale de dispositifs de chauffage électrique, EHD, locaux qui peuvent être activés dans un intervalle de commande unique, une nouvelle valeur du nombre de dispositifs, EHD, faisant l'objet d'une requête d'activation pour une réponse à une demande, N_{req}, est définie égale à la somme du nombre actuel de dispositifs, EHD, actuellement actifs, N_{active}, et de la valeur maximale, N_{step,max}, représentant la quantité maximale de dispositifs, EHD, qui peuvent être activés dans un intervalle de commande unique, dans lequel en particulier si la nouvelle valeur du nombre de dispositifs, EHD, faisant l'objet d'une requête d'activation pour une réponse à une demande, N_{req}, a été augmentée par rapport à un intervalle de temps précédent, la minuterie est remise à zéro.

6. Système selon l'une des revendications précédentes, **caractérisé en ce que**, dans le mode de fonctionnement de décalage de charge de pointe, PLS, le système de commande de surveillance basé sur le cloud, CSC, est configuré pour calculer une valeur de demande d'électricité cible, Pₛₑₜ, à partir de la moyenne de la demande d'électricité totale pour l'ensemble du micro-réseau, P_{dem}, sur les n intervalles de mesure précédents dans une certaine période de temps, dans lequel n est un entier, dans lequel, sur la base d'une heure actuelle de la journée, ToD, et de la valeur de demande d'électricité cible, Pₛₑₜ,
i) si l'heure actuelle de la journée, ToD, est dans une période de demande de pointe prédéfinie, le nombre de dispositifs, EHD, faisant l'objet d'une requête d'activation pour une réponse à une demande, N_{req}, est fixé à zéro ; et/ou
ii) si l'heure actuelle de la journée, ToD, est en dehors d'une période de demande de pointe prédéfinie et la demande actuelle est supérieure à la valeur de demande d'électricité cible, Pₛₑₜ, le nombre de dispositifs, EHD, pour une activation pour une réponse à une demande, N_{req}, est diminué d'un ; et/ou
iii) si l'heure actuelle, ToD, est en dehors d'une période de demande de pointe prédéfinie, la demande actuelle est inférieure ou égale à la valeur de demande d'électricité cible, Pₛₑₜ, et le nombre actuel de dispositifs, EHD, faisant l'objet d'une requête d'activation pour une réponse à une demande, N_{req}, est égal à une valeur maximale, N_{maχ}, représentant la quantité maximale de dispositifs de chauffage électrique, EHD, locaux pouvant être activés pour le fonctionnement à la demande, le nombre de dispositifs, EHD, faisant l'objet d'une requête d'activation pour une réponse à une demande, N_{req}, est maintenu à sa valeur actuelle ; et/ou
iv) si l'heure actuelle, ToD, est en dehors d'une période de demande de pointe prédéfinie, la demande actuelle est inférieure ou égale à la valeur de demande d'électricité cible, Pₛₑₜ, et le nombre actuel de dispositifs, EHD, faisant l'objet d'une requête d'activation pour une réponse à une demande, N_{req}, est inférieur à une valeur maximale, N_{maχ}, représentant la quantité maximale de dispositifs de chauffage électriques locaux, EHD, qui peuvent être activés pour le fonctionnement à la demande, le nombre de dispositifs, EHD, demandés pour l'activation pour la réponse à la demande, N_{req}, est augmenté de 1 ;
dans lequel, de préférence, si la différence entre une nouvelle valeur du nombre de dispositifs, EHD, faisant l'objet d'une requête d'activation pour une réponse à une demande, N_{req}, et un nombre actuel de dispositifs, EHD, actuellement actifs, N_{active}, est supérieure à une valeur maximale, N_{step,max}, représentant la quantité maximale de dispositifs de chauffage électrique, EHD, locaux qui peuvent être activés dans un intervalle de commande unique, une nouvelle valeur du nombre de dispositifs, EHD, faisant l'objet d'une requête d'activation pour une réponse à une demande, N_{req}, est fixée égale à la somme du nombre actuel de dispositifs, EHD, actuellement actifs, N_{active}, et de la valeur maximale, N_{step,max}, représentant la quantité maximale de dispositifs, EHD, qui peuvent être activés dans un intervalle de commande unique, dans lequel, en particulier, si la nouvelle valeur du nombre de dispositifs, EHD, faisant l'objet d'une requête d'activation pour une réponse à une demande, N_{req}, a été augmentée par rapport à un intervalle de temps précédent, la minuterie est remise à zéro.

7. Système selon les revendications précédentes, **caractérisé en ce que**, dans le mode de fonctionnement d'autoconsommation d'énergies renouvelables, RSC, et/ou dans le mode de fonctionnement de décalage de charge de pointe, PLS, le système de commande basé en nuage, CSC, est configuré pour évaluer les dispositifs de chauffage électrique, EHD, locaux pour des critères d'éligibilité et pour classer les dispositifs de chauffage électrique, EHD, locaux en fonction de leur éligibilité, dans lequel un numéro d'indice de classement inférieur indique une priorité de classement supérieure, facultativement un indice de 1 indique un classement supérieur, dans lequel les critères d'éligibilité des dispositifs de chauffage électrique, EHD, locaux sont de préférence déterminés par
i) leur statut étant actif ou inactif, dans lequel les dispositifs de chauffage électrique, EHD, locaux actuellement actifs sont affectés à un rang de priorité plus élevé que les dispositifs de chauffage électrique, EHD, locaux actuellement inactifs ; et
ii) une température actuelle de l'accumulateur d'énergie thermique, TES, local auquel ils sont connectés, dans lequel les dispositifs de chauffage électrique, EHD, locaux connectés à un accumulateur d'énergie thermique, TES, local présentant une température plus basse, sont affectés à une priorité de rang supérieur aux dispositifs de chauffage électrique, EHD, locaux connectés à un accumulateur d'énergie thermique, TES, local présentant une température plus élevée ;
dans lequel, en particulier, un dispositif de chauffage électrique, EHD, local est éligible si son état actuel est actif et la température actuelle de son accumulateur d'énergie thermique, TES, local, est inférieure à une température de consigne de chauffage, T_{sp,dr}, ou est éligible si son état actuel est inactif et la température actuelle de son accumulateur d'énergie thermique, TES, local est inférieure à une température de consigne de chauffage, T_{sp,dr}, moins une valeur, ΔT_{drop,min}, par laquelle la température de l'accumulateur d'énergie thermique, TES, local est autorisé à chuter après un mode de fonctionnement précédent.

8. Système selon la revendication précédente, **caractérisé en ce que**, dans le mode de fonctionnement d'autoconsommation d'énergies renouvelables, RSC, et/ou dans le mode de fonctionnement de décalage de charge de pointe, PLS, le système de commande basé sur le cloud, CSC, est configuré pour évaluer individuellement les dispositifs de chauffage électrique, EHD, locaux en fonction de leur indice de classement, de sorte que le dispositif de commande est configuré pour soumettre
i) tous les dispositifs de chauffage électrique, EHD, locaux qui sont éligibles et présentent un indice de classement inférieur ou égal à une valeur, N_{req}, qui représente la quantité de dispositifs de chauffage électrique, EHD, locaux qui font l'objet d'une requête pour le mode de fonctionnement, aux actions de commande suivantes :
Réglage d'une valeur de température de consigne de chauffage, Tₛₚ, stockée par le dispositif de commande thermostatique, LTC, local à une valeur de réponse à une demande, T_{sp,dr}, et stockage de la valeur de température de consigne de chauffage précédente, Tₛₚ, en mode de fonctionnement normal en tant que valeur de température de consigne de chauffage précédente, T_{sp,prev}, afin que cette valeur puisse être restaurée sur le dispositif de commande thermostatique local, LTC, lorsque le mode de fonctionnement de réponse à une demande se termine ;
Activation des dispositifs de chauffage électrique, EHD, locaux ou, s'ils sont déjà actifs, maintien des dispositifs de chauffage électrique, EHD, locaux actifs ; et
Désactivation des dispositifs de chauffage électrique, EHD, locaux lorsqu'une température de consigne est atteinte ; et/ou
ii) tous les dispositifs de chauffage électrique, EHD, locaux qui ne sont pas éligibles, ou sont éligibles et présentent un indice de classement supérieur à une valeur, N_{req}, qui représente la quantité de dispositifs de chauffage électrique, EHD, locaux qui font l'objet d'une requête pour le mode de fonctionnement de la réponse à une demande, reçoivent les actions de commande suivantes :
Restauration d'une valeur de température définie dans le dispositif de commande thermostatique local, LTC, à une valeur de température de consigne de chauffage précédente, T_{sp,prev}, avant le mode de fonctionnement ;
Désactivation des dispositifs de chauffage électrique, EHD, locaux ou, s'ils ne sont pas actifs, maintien des dispositifs de chauffage électrique, EHD, locaux inactifs.

9. Système selon l'une des revendications précédentes, **caractérisé en ce que** chaque dispositif de commande thermostatique local, LTC, est configuré pour commander un mode de fonctionnement des dispositifs de chauffage électrique, EHD, locaux auxquels il est connecté sur la base d'au moins les informations suivantes :
i) une valeur de température représentative qui est mesurée par un capteur de température de chaque accumulateur d'énergie thermique, TES, local et communiquée au dispositif de commande thermostatique local, LTC ;
ii) une valeur de température de consigne de chauffage ajustable stockée par le dispositif de commande thermostatique local, LTC ;
iii) une bande d'hystérésis ajustable stockée par le dispositif de commande thermostatique local, LTC ; et
iv) une commande d'activation de chauffage lors de la détection que la valeur de température représentative est tombée en dessous d'une valeur limite inférieure égale à la température de consigne de chauffage moins la bande d'hystérésis et/ou lors de la réception d'un signal « HEAT NOW » provenant du système de commande de surveillance basé sur le cloud, CSC, ou d'un utilisateur ; et
v) un ordre de désactivation de chauffage lors d'une détection que la température représentative a dépassé la température de consigne de chauffage et/ou lors de la réception d'un signal « HEAT OFF » provenant du système de commande de surveillance basé sur le cloud, CSC, ou d'un utilisateur.

10. Système selon l'une des revendications précédentes, **caractérisé en ce que** chaque dispositif de commande thermostatique local, LTC, est configuré pour recevoir au moins les paramètres de commande suivants à partir du système de commande de supervision basé sur le cloud, CSC :
i) une température de consigne de chauffage pour commander son accumulateur d'énergie thermique, TES, local connecté, dans lequel la température de consigne de chauffage est une température au-dessus de laquelle les dispositifs de chauffage électrique, EHD, locaux sont désactivés ; et
ii) une instruction « HEAT NOW » après laquelle les dispositifs de chauffage électrique, EHD, locaux sont activés et restent actifs jusqu'à ce que la température de l'accumulateur d'énergie thermique, TES, local atteigne la température de consigne de chauffage.

11. Système selon l'une des revendications précédentes, **caractérisé en ce que** chaque dispositif de commande thermostatique, LTC, local est configuré pour envoyer des informations sur un état actuel du dispositif de chauffage électrique, EHD, local auquel il est connecté et un état actuel de l'accumulateur d'énergie thermique, TES, local auquel il est connecté au système de commande de supervision basé sur le cloud, CSC, à des intervalles réguliers, dans lequel l'état actuel est de préférence
i) un état indiquant si le dispositif de chauffage électrique, EHD, local est actuellement actif ou inactif ; et/ou
ii) un état sur la température actuelle de l'accumulateur d'énergie thermique, TES, local tel que déterminé par son capteur de température.

12. Système selon l'une des revendications précédentes, **caractérisé en ce que** le système de commande de supervision basé sur le cloud, CSC, comprend au moins un, de préférence la totalité, des fonctions et/ou paramètres suivants :
i) une fonction de logique de commande programmable qui permet d'effectuer des actions sur la base de conditions booléennes vrai/faux ;
ii) une fonction de minuterie qui mesure le temps écoulé et peut être réinitialisée selon les conditions booléennes vrai/faux mentionnées ci-dessus ;
iii) une fonction de « tri » qui applique un indice de classement à chaque dispositif de chauffage électrique, EHD, local sur la base d'une pluralité d'attributs priorisés dans la logique de commande ;
iv) des paramètres réglables pour une commande, y compris : un intervalle de temps de commande ; un incrément de commande maximum et une température de consigne amplifiée appliquée au dispositif de commande local de chacun des dispositifs de chauffage électrique, EHD, locaux ;
v) une fonction de mémoire qui permet au système de commande de supervision basé sur le cloud, CSC, de stocker des valeurs de température de consigne antérieures appliquées à chaque dispositif de commande thermostatique local, LTC, avant qu'une opération de chauffage de réponse à la demande ne soit activée, et plus tard de restaurer ces valeurs précédentes aux réglages internes de chaque dispositif de commande thermostatique local lorsque l'opération de chauffage de réponse à la demande est désactivée ;
vi) une fonction d'horloge qui fournit l'heure actuelle de la journée, de préférence une horloge de 24 heures ; et
vii) des fonctions de diagnostic au niveau du microréseau, en particulier la capacité de calculer la demande totale moyenne de puissance électrique sur une période historique définie, de préférence les 24 heures précédentes.

13. Système selon l'une des revendications précédentes, **caractérisé en ce que** les moyens d'échange d'énergie électrique comprennent ou consistent en
i) un macroréseau à grande échelle, de préférence un macroréseau à l'échelle régionale ou un macroréseau à l'échelle nationale ; et/ou
ii) un générateur de système d'énergie non renouvelable, NRES, facultativement un générateur à base de diesel ou à base d'essence, en outre facultativement en combinaison avec des moyens de stockage d'énergie, de préférence une batterie secondaire et/ou un condensateur, dans lequel dans un cas dans lequel les moyens de stockage d'énergie sont absent desdits moyens d'échange d'énergie électrique non renouvelable ou ont atteint leur pleine capacité de charge électrique, la puissance exportée, Pₑₓₚₒᵣₜ, est une puissance réduite, P_{curtailed}.

14. Système selon l'une des revendications précédentes, **caractérisé en ce que** chacun de la pluralité de dispositifs de chauffage électrique, EHD, locaux est un dispositif capable de convertir de l'électricité en chaleur stockable, dans lequel le dispositif capable de convertir de l'électricité en chaleur stockable est de préférence choisi dans le groupe comprenant un dispositif de chauffage par immersion électrique, une pompe à chaleur vapeur-compression, des dispositifs thermoélectriques et des combinaisons de ceux-ci.

15. Système selon l'une des revendications précédentes, **caractérisé en ce que** chacun des accumulateurs d'énergie thermique, TES, locaux est un récipient contenant un milieu capable de stocker de la chaleur dans une plage de température souhaitée, dans lequel le récipient est de préférence sélectionné dans le groupe comprenant un cylindre d'eau chaude domestique, un récipient tampon de fluide caloporteur, un accumulateur de matériau à changement de phase, PCM, un récipient de stockage à lit garni et des combinaisons de ceux-ci.

16. Utilisation du système selon l'une des revendications précédentes pour commander une réponse à la demande d'une pluralité de dispositifs de chauffage électrique.
